# EUROPEAN PATENT SPECIFICATION

(11) **EP 3 406 522 B1**
(45) Date of publication and mention of the grant of the patent: **07.04.2021**
(21) Application number: 17198168.1
(22) Date of filing: 24.10.2017
(51) Int. Cl.: B64C 29/00

(54) **ROTOR ASSEMBLIES AND RELATED CONTROL SYSTEMS**
ROTORANORDNUNGEN UND ZUGEHÖRIGE STEUERUNGSSYSTEME
ENSEMBLES DE ROTOR ET SYSTÈMES DE COMMANDE ASSOCIÉS

(30) Priority: 26.05.2017 US 201715607001
(43) Date of publication of application: 28.11.2018
(73) Proprietor: Bell Helicopter Textron Inc., Fort Worth, TX 76101 (US)
(72) Inventor: BRUNKEN, John E., Colleyville, TX Texas 76034 (US); BOSWORTH, Jeffrey M., Flower Mound, TX Texas 75028 (US)
(74) Representative: Barker Brettell LLP

(56) References cited:
- EP-A1- 3 028 943
- EP-A2- 1 985 536
- EP-A2- 2 450 764
- US-A- 4 519 743
- US-A1- 2006 027 703
- US-B1- 6 499 952

## Description

### BACKGROUND

### Technical Field:

The present disclosure relates to aircrafts and, more particularly, to tiltrotor aircraft rotor assemblies, components thereof, and control systems relating thereto.

### Description of Related Art:

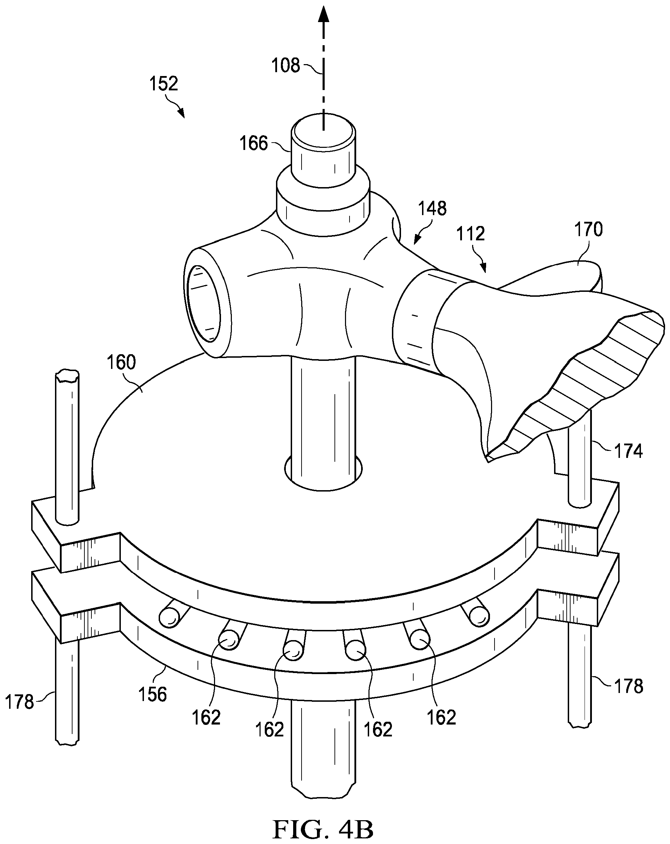

Rotor assemblies for helicopters and tiltrotor aircraft are complex electrical and/or mechanical systems. The control system for the rotor assembly responds to the pilot's input, but also must accommodate forces acting upon the rotor assemblies which are generally outside the control of the pilot. Mechanical control systems typically include a swashplate arrangement which consists of a stationary portion and a rotating portion, as shown in FIG. 4B. Typically, the lower, stationary portion is fixed in position and will not rotate, but has the ability to move up and down and/or tilt in any given direction. This is commonly referred to as the "stationary" or "nonrotating" plate. Pilot inputs alter the vertical position of the stationary plate through the collective control and the tilt of the stationary plate through the cyclic control. The rotating portion of the swashplate arrangement is free to rotate. The rotating portion is typically connected mechanically to each individual rotor blade. For example, in one type of control system, as shown in FIG. 4B, pitch links directly connect pitch horns on the rotor blades to the rotating plate of the swashplate, allowing the swashplate to alter the blade angle of each rotor blade. Pilot inputs to the nonrotating portion are passed through to the rotating portion of the control systems.

In tiltrotor aircraft, it is often necessary to include a subsystem in the control system for the rotor assembly which reduces the degree of flapping and other stability concerns. In the prior art, there are two basic approaches: one is to utilize a delta-3 hinge, the other is to utilize offset pitch horns.

Such control systems and subsystems are typically constrained to sinusoidal control functions and do not permit tailoring of rotor blade adjustments to forces experienced on a particular blade. Instead, conventional control systems are required to adjust all rotor blades according to the same function, whether or not an adjustment is required on all blades.

In tiltrotor aircraft, it is especially important to counteract the detrimental effects of flapping, especially because the aircraft is capable of very high speed travel, particularly in airplane mode of flight. In some scenarios, the excessive flapping, vibratory, and/or other forces exerted by the rotary blades can cause an adverse force on the wing, which could result in failure. Conventional rotor assembly controls are constrained by available control functions, such as sinusoidal control function, that do not permit tailoring of rotor blade adjustments to forces experienced on a particular blade. Instead, existing control systems are required to adjust all rotor blades according to the same

There is a need for a rotor assembly that enables independent control of one or more rotor blades to improve control of a tiltrotor aircraft, which can improve aircraft stability, improve safety, decrease repair costs, and enable higher maximum air speeds.

One example of a rotorcraft blade control system is described in EP 3028943, which includes a mechanical linkage to connect to a rotorcraft blade including a feather axis and a pneumatic muscle connected to the mechanical linkage. The system also includes a movement member connected to the mechanical linkage, the pneumatic muscle and the movement member to move the mechanical linkage to control movement of the rotorcraft blade on the feather axis. The pneumatic muscle can be a first pneumatic muscle and the movement member can be a second pneumatic muscle or a bias spring.

A rotary actuator is disclosed in US 6499952, which includes an actuator assembly having a torque tube formed of a shape memory alloy (SMA), a superelastic NiTinol return spring associated with the torque tube and adapted to bias the torque tube toward an initial position, and a torque tube heating element, especially a thermoelectric device, for switching the SMA to cause rotation to an object connected to the actuator or to generate a torque upon that object. The torque tube includes a proximal end and a distal end. The return spring and torque tube are connected at their ends, with the torque tube being pretwisted while in a martensitic state relative to the spring. Activation of the heating element causes the torque tube to enter an austenitic state in which it returns to its previous untwisted configuration. Removal of heat allows the torque tube to return to a martensitic state, when the return spring retwists the torque tube.

### SUMMARY

In a first aspect, there is provided a rotor assembly according to claim 1.

In an embodiment, the aircraft includes a fuselage; a wing rigidly attached to the fuselage; a rotary system pivotally attached to the wing; the rotary system including a plurality of rotor blades and a control system operable associated with the rotary system.

In another embodiment, the assembling includes at least one sensor configured to detect at least one of rotor whirl, rotor flapping, and wing bending; wherein the at least one controller is configured to enable the at least one root actuator to adjust the at least one rotor blade independently of the other rotor blades in response to detections of the at least one sensor.

In yet another embodiment, the at least one controller is configured to enable the at least one root actuator to adjust the at least one rotor blade with a non-sinusoidal command signal.

In still another embodiment, the assembly includes at least one blade root actuator configured to adjust each of the plurality of rotor blades independently of the other rotor blades to accommodate forces on the aircraft; wherein the at least one controller is couplable to each blade root actuator and configured to send a signal to each blade root actuator to enable adjustment of each of the plurality of rotor blades.

In an embodiment, the at least one controller is configured to enable each blade root actuator to adjust each rotor blade with a command signal, wherein the command signal is a non-sinusoidal command signal, and wherein the command signal for each rotor blade is different from the other rotor blades.

In one embodiment, there is included at least one blade flap couplable to the trailing edge of at least one of the plurality of rotor blades; and at least one blade flap actuator couplable to the at least one blade flap and configured to adjust the at least one blade flap to accommodate forces on the aircraft; wherein the at least one controller is couplable to the at least one blade flap actuator and configured to enable the blade flap actuator to adjust the at least one blade flap independently of the other blade flaps, if any.

In a second aspect, there is provided a rotor assembly including a hub configured to be coupled to an aircraft; a plurality of rotor blades configured to extend laterally from the hub and to rotate about the hub, each of the rotor blades including an inboard end, an outboard end, a leading edge, and a trailing edge; at least one blade flap couplable to the trailing edge of at least one of the plurality of rotor blades; at least one blade flap actuator couplable to the at least one blade flap and configured to adjust the at least one blade flap to accommodate forces on the aircraft; and at least one controller couplable to the at least one blade flap actuator and configured to enable the blade flap actuator to adjust the at least one blade flap independently of the other blade flaps, if any.

In an embodiment, the assembly includes at least one sensor configured to detect at least one of rotor whirl, rotor flapping, and wing bending; wherein the at least one controller is configured to enable the at least one blade flap actuator to adjust the at least one blade flap independently of the other blade flaps, if any, in response to detections of the at least one sensor.

In another embodiment, the at least one controller is configured to enable the at least one blade flap actuator to adjust at least one of blade pitch and blade flapping position by adjusting the at least one blade flap.

In one embodiment, the assembly includes at least one blade flap couplable to the outboard end of at least one of the plurality of rotor blades.

In an exemplary embodiment, the assembly includes at least one blade flap couplable to each of the plurality of rotor blades; and at least one blade flap actuator couplable to each blade flap and configured to adjust the at least one blade flap to accommodate forces on the aircraft; wherein the at least one controller is couplable to the at least one blade flap actuator and configured to enable adjustment of each blade flap independently of the other blade flaps.

In yet another embodiment, the at least one controller is configured to enable the at least one blade flap actuator to adjust each blade flap with a command signal, and wherein the command signal for each blade flap is different from the other blade flaps.

In an embodiment, the at least one blade root actuator is configured to adjust at least one of the plurality of rotor blades independently of the other rotor blades to accommodate forces on the aircraft; wherein the at least one controller is couplable to the at least one blade root actuator and configured to send a signal to the at least one blade root actuator to enable adjustment of the at least one of the plurality of rotor blades.

Furthermore there is provided a method for stabilizing a tiltrotor aircraft according to claim 10.

In an embodiment, the first actuator includes a blade root actuator, and the adjusting step includes adjusting the pitch of the first rotor blade.

In another embodiment, the first actuator includes a flap actuator, and the adjusting step includes adjusting a flap associated with the first rotor blade.

In an exemplary embodiment, the first command signal is non-sinusoidal.

In yet another embodiment, the method includes determining, by a controller, a second desired stability value for a second rotor blade based on at least in part on the forces on the aircraft; generating a second command signal corresponding to the second desired stability value to a second actuator associated with the second rotor blade; and adjusting, with the second actuator, the second rotor blade independently of the other rotor blades to achieve the second desired stability value; wherein the first command signal and the second command signal are different.

In an embodiment, the second actuator includes a flap actuator, and the adjusting step includes adjusting a flap associated with the second rotor blade.

There is further provided a stabilization system for a tiltrotor aircraft according to claim 11.

In an embodiment, the first and second command signals are non-sinusoidal.

Other aspects, features, and advantages will become apparent from the following detailed description when taken in conjunction with the accompanying drawings, which are a part of this disclosure and which illustrate, by way of example, principles of the inventions disclosed.

### DESCRIPTION OF THE DRAWINGS

The novel features believed characteristic of the embodiments of the present disclosure are set forth in the appended claims. However, the embodiments themselves, as well as a preferred mode of use, and further objectives and advantages thereof, will best be understood by reference to the following detailed description when read in conjunction with the accompanying drawings, wherein:
FIG. 1 is a perspective view of an aircraft, according to one example embodiment;
FIG. 2 is another perspective view of an aircraft, according to one example embodiment;
FIG. 3 is a top view of a rotor assembly, according to one example embodiment;
FIG. 4A is a schematic showing the forces on a rotor assembly of a helicopter, according to one example embodiment;
FIG. 4B is a perspective view of a portion of the rotor assembly; according to one example embodiment;
FIG. 4C is a simplified pictorial representation of the response of a wing, a pylon, and nacelle assembly to a disturbance;
FIG. 4D illustrates the causes of proprotor aeroelastic instability;
FIG. 5A is a top view of another rotor assembly, according to one example embodiment;
FIGS. 5B is a simplified pictorial representation of FIG. 5A depicting the rotor assembly, according to one example embodiment;
FIGS. 5C-5E are simplified pictorial representations of the rotor assembly of FIG. 5A; according to several exemplary embodiments;
FIGS. 5F-5G are side views of a rotor blade having a first shape and an adjusted shape; according to exemplary embodiments;
FIG. 6A is a top view of still another rotor assembly, according to one example embodiment;
FIG. 6B is a simplified pictorial representation of FIG. 5B depicting the rotor assembly, according to one example embodiment;
FIGS. 6C-6D are cross-sectional views taken along A-A section lines in FIG. 6B; according to one example embodiment;
FIG. 7 is a schematic of a rotor blade assembly control system, according to one example embodiment.
FIG. 8A is a flowchart representation of the method of stabilizing a tiltrotor aircraft during operation, according to one example embodiment; and
FIG. 8B is a schematic of a computer system according to one example embodiment.

### DESCRIPTION OF THE PREFERRED EMBODIMENT

Illustrative embodiments of the assemblies, methods, and systems are described below. In the interest of clarity, all features of an actual implementation may not be described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, assemblies, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the devices, members, assemblies, etc. described herein may be oriented in any desired direction.

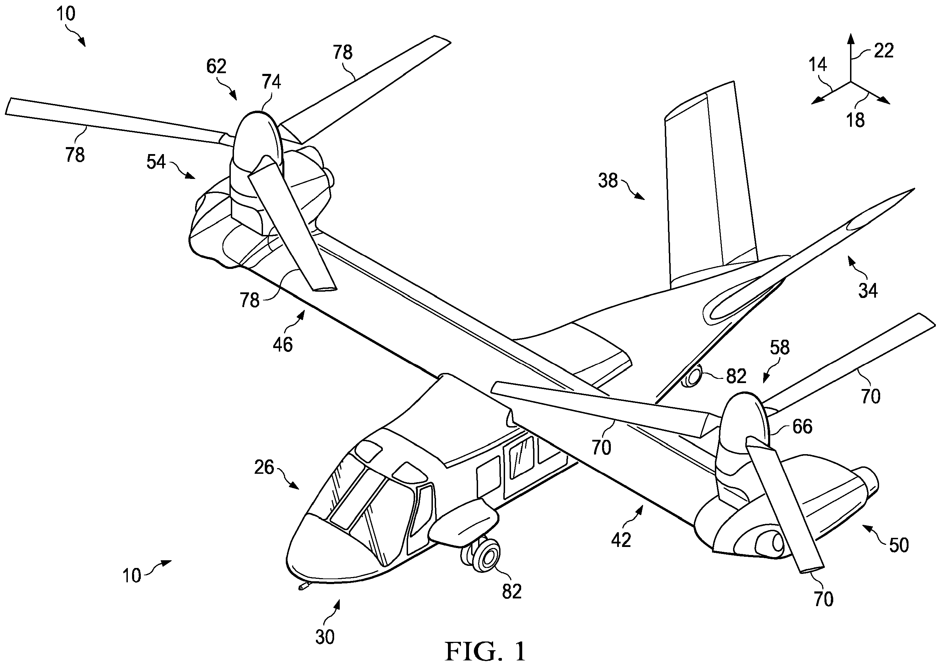

FIGS. 1-2 depict aircraft 10 as a tiltrotor aircraft. FIGS. 1-2 depict three mutually orthogonal directions X, Y, and Z forming a three-dimensional frame of reference XYZ. Longitudinal axis X 14 corresponds to the roll axis that extends through the center of aircraft 10 in the fore and aft directions. Transverse axis Y 18 is perpendicular to longitudinal axis 14 and corresponds to the pitch axis (also known as a control pitch axis or "CPA"). The X-Y plane is considered to be "horizontal." Vertical axis Z 22 is the yaw axis and is oriented perpendicularly with respect to the X-Y plane. The X-Z plane and Y-Z plane are considered to be "vertical."

Aircraft 10 includes fuselage 26 as a central main body. Fuselage 26 extends parallel to longitudinal axis 14 from a fuselage front end 30 to a fuselage rear end 34. Aircraft 10 further includes tail member 38 extending from fuselage rear end 34 of fuselage 26. Aircraft 10 includes wing 42 and wing 46 extending from fuselage 26 substantially parallel to transverse axis Y 18. Wing 42 is coupled to propulsion system 50, and wing 46 is coupled to propulsion system 54. Propulsion system 50 includes rotor assembly 58, and propulsion system 54 includes rotor assembly 62. Rotor assembly 58 includes rotor hub 66 and plurality of rotor blades 70 extending from rotor hub 66. Similarly, rotor assembly 62 includes rotor hub 74 and plurality of rotor blades 78 extending from rotor hub 74. Each of rotor assemblies 58 and 62 can, for example, be coupled to and controlled with an engine and gearbox connected to a driveshaft, such as one continuous driveshaft extending from propulsion system 50 to propulsion system 54 or a segmented driveshaft separated by a gearbox.

Rotor assemblies 58 and 62 are controllable and positionable to, for example, enable control of direction, thrust, and lift of aircraft 10. For example, FIG. 1 illustrates aircraft 10 in a first configuration, in which propulsion systems 50 and 54 are positioned to provide a lifting thrust to aircraft 10, if activated. In the embodiment shown in FIG. 1, propulsion systems 50 and 54 are positioned such that, if activated, aircraft 10 moves substantially in the Z direction ("helicopter mode"). In the embodiment shown in FIG. 1, aircraft 10 further includes landing gear 82 with which aircraft 10 can contact a landing surface.

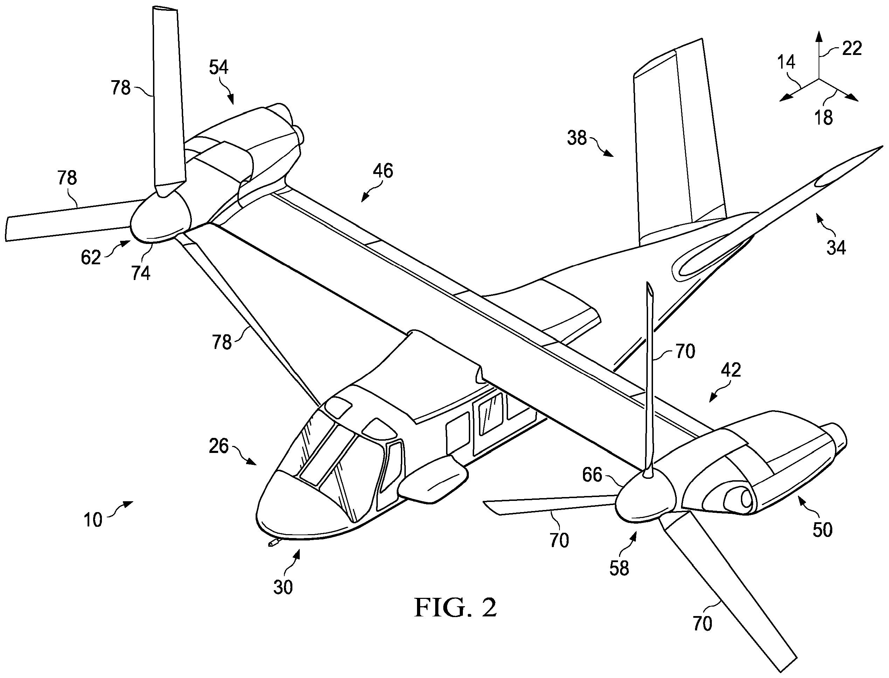

FIG. 2 illustrates aircraft 10 in a second configuration, in which propulsion systems 50 and 54 are positioned to provide a forward thrust to aircraft 10, if activated. In the embodiment shown in FIG. 2, propulsion systems 50 and 54 are positioned such that, if activated, aircraft 10 moves substantially in the X direction ("airplane mode"). In the second configuration depicted in FIG. 2, wings 42 and 46 enable a lifting thrust to be provided to aircraft 10. Though not depicted in FIGS. 1-2, propulsion systems 50 and 54 can be controllably positioned in helicopter mode, airplane mode, or any position between helicopter mode and airplane mode to provide for a desired direction, thrust, and/or lift.

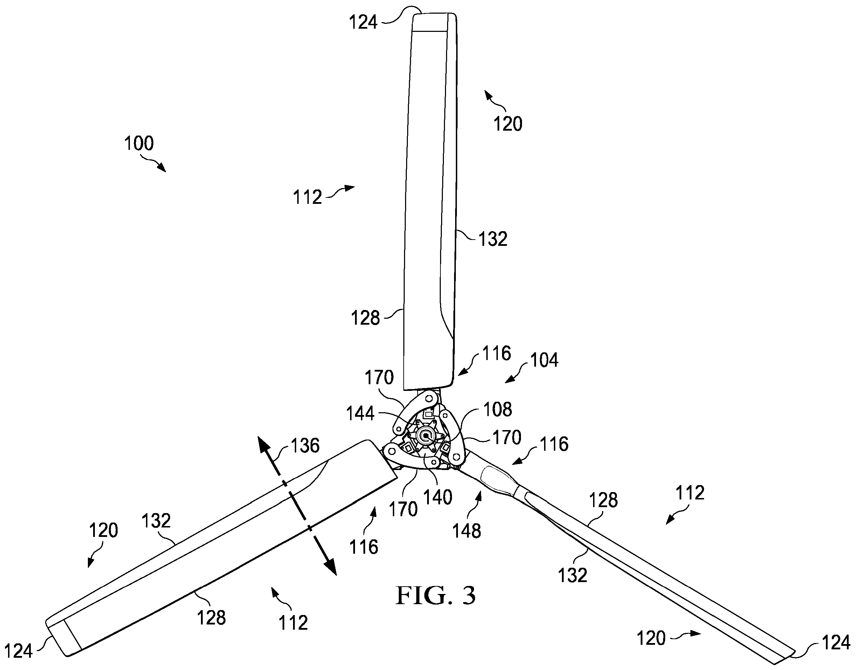

FIGS. 3-6 depict rotor assemblies, components thereof, and control systems relating thereto. Any rotor assembly, component thereof, or control system relating thereto depicted in FIGS. 3-6 and/or described herein can be used in combination with aircraft 10 depicted in FIGS. 1-2 to operate as described. Additionally, the rotor assemblies, components thereof, and control systems relating thereto depicted in FIGS. 3-6 and/or described herein can be used with any aircraft configured or configurable to include one or more rotor assemblies, including helicopters, tilt wing aircrafts, unmanned aerial vehicles (UAVs), and other vertical lift aircrafts, or can further be used with any device configured or configurable to include a rotor blade, including devices with propellers, windmills, and wind turbines. Further, any features of one embodiment of the one or more rotor assemblies or components thereof in this disclosure can be used with any other embodiment of the one or more rotor assemblies, components thereof, or control systems relating thereto in this disclosure such that the other embodiment has the same or similar features, operates in the same or similar way, or achieves the same or similar functions.

FIG. 3 depicts rotor assembly 100. In the embodiment shown, rotor assembly 100 includes rotor hub 104 having hub axis 108. Rotor hub 104 is configured to be coupled to an aircraft, such as a tiltrotor aircraft as depicted in FIGS. 1-2. If rotor assembly 100 is coupled to a tiltrotor aircraft as described in FIGS. 1-2, and if the tiltrotor aircraft is in helicopter mode, hub axis 108 is substantially parallel to vertical axis Z 22. If rotor assembly 100 is coupled to a tiltrotor aircraft as described in FIGS. 1-2, and if the tiltrotor aircraft is in airplane mode, hub axis 108 is substantially parallel to longitudinal axis X 14.

In the embodiment shown in FIG. 3, plurality of rotor blades 112 are couplable to hub 104 (and are depicted as coupled in the embodiment shown) and are configured to extend laterally from hub 104 (and are depicted as extending laterally from hub 104 in the embodiment shown). Hub 104 is couplable to one or more engines (mechanically and electrically) to enable the engine, if activated, to transfer energy to hub 104 and into plurality of rotor blades 112 to enable plurality of rotor blades 112 to rotate about hub axis 108. Each of rotor blades 112 includes inboard portion 116, which is coupled to hub 104, and outboard portion 120 extending outward from hub 104 and ending in blade tip 124. Each of rotor blades 112 further includes trailing edge 128 and leading edge 132, and chordwise axis 136 passing through trailing edge 128 and leading edge 132. Hub 104 includes yoke 140 and hub plate 144, each of which is coaxial with hub axis 108. Each of rotor blades 112 includes grip 148 that is couplable (and is depicted as coupled in the embodiment shown) to hub 104 via yoke 140 to enable energy to transfer from hub 104 to each of rotor blades 112. Mechanical and electrical interconnections may be required or desirable to couple hub 104 to each of rotor blades 112, such as those that may be required or desirable to have mechanically and electrically powered components in space-constrained locations.

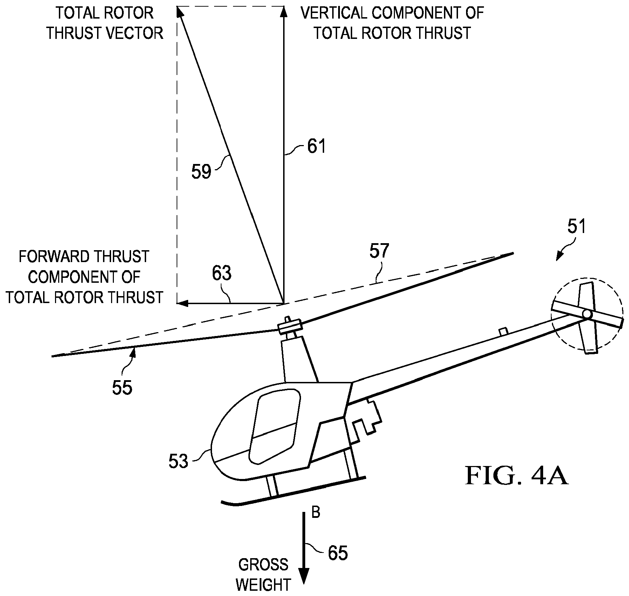

FIG. 4A depicts a helicopter 51 which can integrate a rotor assembly as described herein. Helicopter 51 includes a fuselage 53 and rotor assembly 55. Rotor assembly 55 defines a rotor disk 57 which is substantially parallel to fuselage 53. The motion of helicopter 51 is determined by a rotor thrust vector 59 which is made up of the vertical component 61 and a forward thrust component 63. In the aggregate, the vertical component 61 of the rotor thrust vector 59 must offset the gross weight 65 which pulls downward on fuselage 53. The forward and backward motion of helicopter 51 is determined by the forward thrust component 63 of the total rotor thrust vector 59. In accordance with an embodiment of the present application, the rotor assemblies 200, 300 described herein can be integrated into helicopter 51 in order to stabilize the craft during flight.

Rotor assembly 100 illustrates a conventional control system that can be used for tiltrotor 10. The convention control system can be a swashplate control system 152 depicted in FIG. 4B. Swashplate control system 152 enables collective control and cyclic control of rotor assembly 100. Swashplate control system 152 includes nonrotating member 156 and rotating member 160 having bearings 162 therebetween, with mast 166 extending coaxially with hub axis 108 through nonrotating member 156 and rotating member 160. Each blade of rotor blades 112 can be coupled to rotating member 160 via a pitch horn 170 and pitch link 174. Nonrotating member 156 and rotating member 160 are coupled (e.g., via member links 178) such that a change in orientation of the nonrotating member 156 results in a corresponding change in orientation of rotating member 160.

Pilot inputs are coupled to swashplate control system 152 to enable a pilot to alter the vertical position of nonrotating member 156 through the collective control and alter the tilt of nonrotating member 156 through the cyclic control. Translating the non-rotating member 156 along the axis 108 causes the pitch link 174 to move up or down. This changes the pitch angle of all blades 112 equally, increasing or decreasing the thrust of the rotor assembly 100 causing the aircraft 10 to ascend or descend. Tilting the non-rotating member 156 causes the rotating member 160 to tilt, moving the pitch links 174 up and down cyclically as they rotate with the drive shaft. This tilts the thrust vector of the rotor assembly 100, which can cause the aircraft 10 to follow the direction the swashplate is tilted. Swashplate control system 152 and specifically cyclic controls, can drive cyclic blade angles with a sinusoidal function such that the motion of each of rotor blade 112 is the same as the motion of each other rotor blade 112 through one full rotation ("flap").

Rotor assembly 100 experiences significant forces when altering the blade angle of each rotor blade 112 through both the collective controls and cyclic controls. The thrust vectors and forces illustrated in FIG. 4A for a helicopter are relevant to a tiltrotor aircraft 10 shown in FIG. 1; however, even more operational and destabilizing forces are experienced during operation of tiltrotor aircraft 10 in airplane, transition, and helicopter modes.

Tiltrotor aircraft 10 can experience a phenomenon referred to as proprotor aeroelastic instability in the airplane mode of flight. This instability is a result of adverse aeroelastic coupling of the rotor system 58, 62 and the wing 42, 46 and propulsion systems 50, 54 to which it is attached. This instability is a significant design driver, which implies that the requirements for wing structural stiffness and propulsion system 50, 54 mass properties are typically based on proprotor aeroelastic stability requirements. The proprotor aeroelastic instability is similar to classical propeller whirl flutter, but it is more complex because a tiltrotor aircraft has a flapping degree of freedom which is not present on a propeller. The rotor flapping degree of freedom causes additional destabilizing forces that can lead to instabilities that are not possible on a conventional propeller. The physical mechanism for this instability is the destabilizing rotor shear forces that are transmitted to the wing 42, 46 and propulsion systems 50, 54 in a high-speed airplane flight condition. These destabilizing rotor shear forces are generated as a result of the rotor flapping response to a disturbance such a gust, or a pilot maneuver.

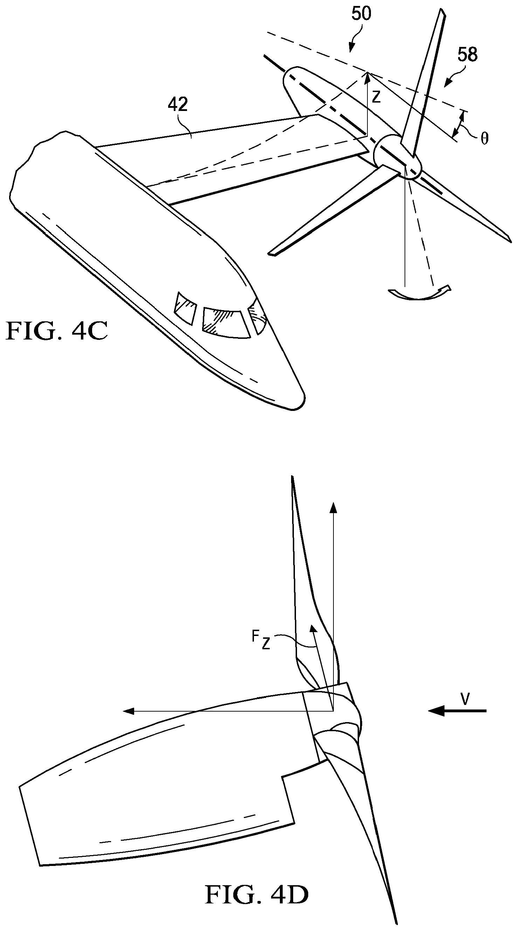

FIG. 4C illustrates a disturbance causing wing 42 to vibrate at one or more of its fundamental natural frequencies. Because rotor 58 and its control system are attached to wing 42 and propulsion system 50, the motion of the wing/pylon 42, 50, changes the angle of attack of the rotor system 58 and causes the rotor system 58 to flap. For a specific rotor design configuration, there exists a range of wing vibration frequencies where the rotor system flapping will create destabilizing hub shears, which can be a source of negative damping and negative stiffness, as shown in FIG. 4D.

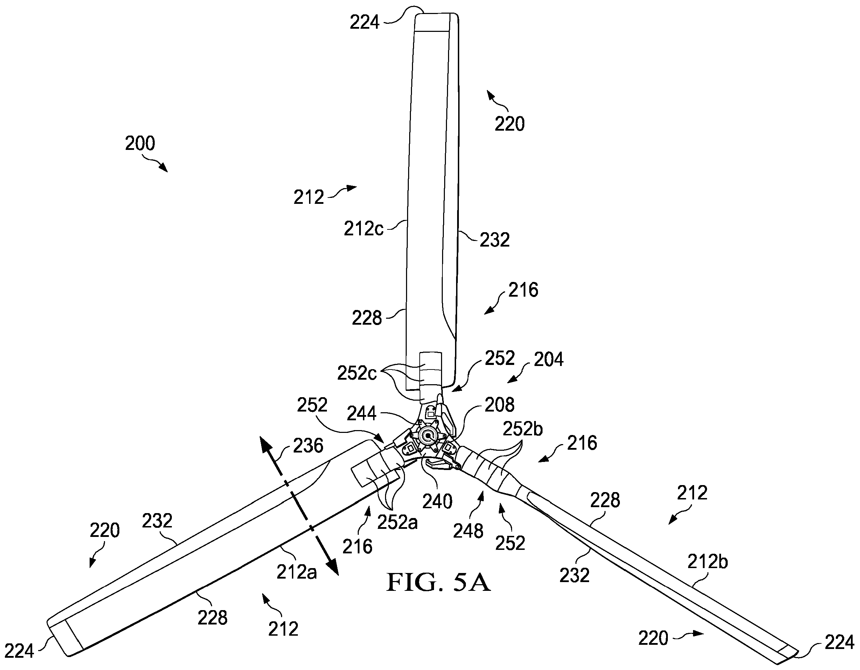

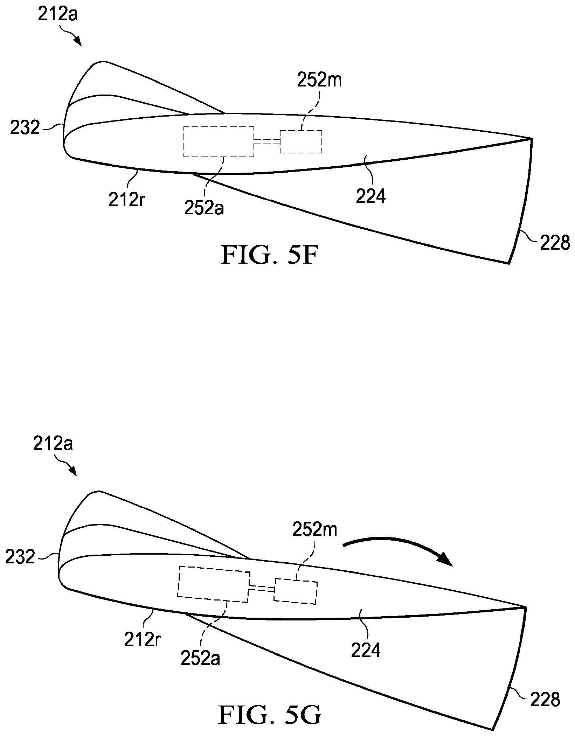

FIG. 5A depicts a rotor assembly 200 configured to overcome the problems associated with disturbances created by rotor system 58 on propulsion system 50 and wing 42. Rotor assembly 200 includes systems and components for independently controlling the pitch of at least one rotor blade 212 which can counteract undesirable disturbances, shear forces, and movements during operation. The features of the rotor assembly 200 can greatly reduce, and possibly eliminate, adverse forces exerted on wing 42 and/or propulsion system 50.

In the embodiment shown, rotor assembly 200 includes rotor hub 204 having hub axis 208. Rotor hub 204 is configured to be coupled to an aircraft, such as a tiltrotor aircraft as depicted in FIGS. 1-2. If rotor assembly 200 is coupled to a tiltrotor aircraft as described in FIGS. 1-2, and if the tiltrotor aircraft is in helicopter mode, hub axis 208 is substantially parallel to vertical axis Z 22. If rotor assembly 200 is coupled to a tiltrotor aircraft as described in FIGS. 1-2, and if the tiltrotor aircraft is in airplane mode, hub axis 208 is substantially parallel to longitudinal axis X 14.

In the embodiment shown in FIG. 5A, plurality of rotor blades 212 are couplable to hub 204 (and are depicted as coupled in the embodiment shown) and are configured to extend laterally from hub 204 (and are depicted as extending laterally from hub 204 in the embodiment shown). Hub 204 is couplable to one or more engines (mechanically and electrically) to enable the engine, if activated, to transfer energy to hub 204 and into plurality of rotor blades 212 to enable plurality of rotor blades 212 to rotate about hub axis 208. Each of rotor blades 212 includes inboard portion 216, which is coupled to hub 204, and outboard portion 220 extending outward from hub 204 and ending in blade tip 224. Each of rotor blades 212 further includes trailing edge 228 and leading edge 232, and chordwise axis 236 passing through trailing edge 228 and leading edge 232. Hub 204 includes yoke 240 and hub plate 244, each of which is coaxial with hub axis 208. Each of rotor blades 212 includes grip 248 that is couplable (and is depicted as coupled in the embodiment shown) to hub 204 via yoke 240 to enable energy to transfer from hub 204 to each of rotor blades 212. Mechanical and electrical interconnections may be required or desirable to couple hub 204 to each of rotor blades 212, such as those that may be required or desirable to have mechanically and electrically powered components in space-constrained locations.

Rotor assembly 200 further includes at least one blade root actuator 252 (three blade root actuators 252 for each of rotor blades 212 in the embodiment shown). Each blade root actuator 252 can be pneumatic, electrical, or mechanical. Each blade root actuator 252 can be coupled to a portion of rotor blade 212 (e.g., inboard portion 216, grip 248, etc.), a portion of hub 204 (e.g., yoke 240, hub plate 244, etc.), or both. Each rotor blade 212 can include one blade root actuator 252 or more than one blade root actuator 252 (e.g., two, three, four, five, six, or more) as depicted in FIG. 5A to, for example, ensure that at least one blade root actuator 252 is operational in the event that others of blade root actuator 252 fail. A first rotor blade 212a can include a first plurality of root blade actuators 252a, a second rotor blade 212b can include a second plurality of root blade actuators 252b, and a third rotor blade 212c can include a third plurality of root blade actuators 252c. Each of the first, second, and third plurality of root blade actuators 252a, 252b, 252c can be only one root blade actuator.

Each blade root actuator 252 is configured to adjust rotor blade 212 to which it corresponds independently of other rotor blades 212. For example, each blade root actuator 252 can be configured to adjust (or assist in adjusting, for example, by changing rotor blade aerodynamics and/or causing elastic twist of the rotor blade), whether permanently or temporarily, the blade angle (or pitch), flapping position, and/or other position of the respective rotor blade 212. Such adjustment can include, for example, adjusting the aerodynamic wake of each rotor blade 212, which can assist in reducing noise produced by rotor assembly 200. Each blade root actuator 252 can be configured to increase the blade angle (or pitch) of rotor blade 212 to which it corresponds, to decrease the blade angle (or pitch) of rotor blade 212 to which it corresponds, and/or to change the flapping position of rotor blade 212 to which it corresponds to, for example, achieve a desired thrust, accommodate a force on the aircraft (e.g., forces on rotor assembly 200, such as forces on plurality of rotor blades 212, forces on aircraft wings, such as wings 42 and 46 of aircraft 10 depicted in FIGS. 1-2, and similar forces), and any other reason that it may be desirable or required to adjust blade angle, blade flapping position, and/or other position.

Each of rotor blades 212 can be controlled by one or more corresponding blade root actuators 252 independently of the other rotor blades 212 such that each blade root actuator 252 can adjust a corresponding rotor blade 212 the same as (e.g., to have the same blade angle and/or flapping position as) or different from (e.g., to have a different blade angle and/or flapping position from) each other rotor blade 212. In the exemplary embodiment, rotor assembly 200 does not have a swashplate control system, such as swashplate control system 152 depicted in FIG. 4B, and can be controlled in part with at least one blade root actuator 252, which is discussed in detail below. However, in other embodiments, rotor assembly 200 can have a swashplate control system, or a modified swashplate control system, that functions in combination with at least one blade root actuator 252 to adjust each of rotor blades 212. In an embodiment, the variable positions of the rotor blades 212 are only controlled by the blade root actuators 252. In an embodiment, the position of the first blade 212a is controlled by the plurality of first root actuators 252a, the position of the second blade 212b is controlled by the plurality of second root actuators 252b, and the position of third blade 212c is controlled by the plurality of third blade actuators 252c.

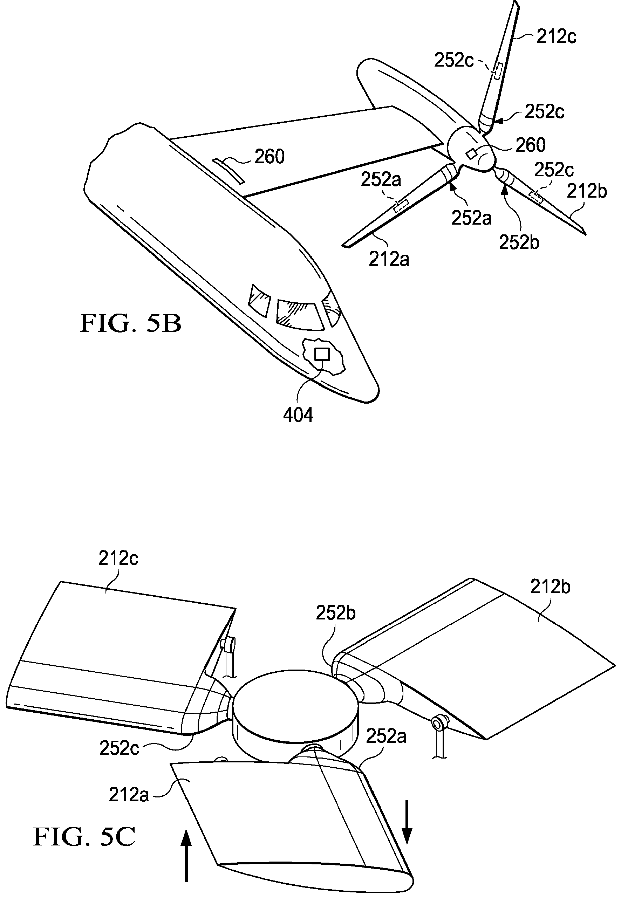

As shown in FIG. 5B, rotor assembly 200 can further include sensors 260. One or more sensors 260 can be coupled to any portion of an aircraft (e.g., a rotor hub, a wing, a fuselage, etc.) to enable one or more sensors 260 to detect relevant forces on the aircraft and/or portions thereof. Sensors 260 can be configured to detect forces on an aircraft (such as forces on rotor assembly 200 or forces on wings of a tiltrotor aircraft to which rotor assembly 200 is coupled), such as forces associated with air movement over the aircraft due to atmospheric conditions near the aircraft (e.g., a gust) or due to movement or adjustment of the aircraft (e.g., a pilot maneuver or an automatic maneuver by an aircraft control system). For example, sensors 260 can be configured to detect at least one of rotor whirl, rotor flapping, and wing bending. Sensors 260 are configured to send parameters that are detected by sensors 260 to one or more controllers 404 (or to have such parameters retrieved by one or more controllers) or computers, which is discussed in detail below.

FIG. 5B illustrates that each of the first, second, and third rotor blades 212a, 212b, 212c can have a substantially same position during operation in airplane mode. A system and method in accordance with an exemplary embodiment provides that the position of at least one rotor blade 212a, 212b, 212c is adjusted independently of the other blades. For example, FIG. 5C shows that the position of first rotor blade 212a has been adjusted by root blade actuator 252a. For example, and not limitation, first rotor blade 212a has been adjusted downward to decrease the pitch angle as compared to the pitch angle of the second and third rotor blades 212b, 212c. Accordingly, the position of only first rotor blade 212a has been adjusted by root blade actuator 252a.

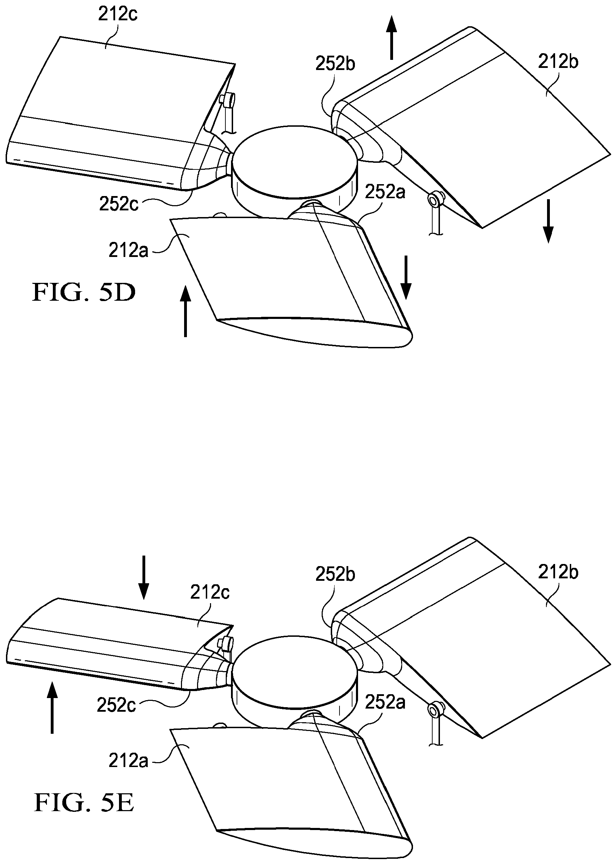

FIG. 5D shows another embodiment such that the position of the first and second rotor blades 212a, 212b have been adjusted by the respective root blade actuator 252a, 252b. First rotor blade 212a is in the position identified in FIG. 5C. The position of second rotor blade 212b has been adjusted by root blade actuator 252b. For example, and not limitation, second rotor blade 212b has been adjusted upward to increase the pitch angle as compared to the pitch angle of the first and third rotor blades 212a, 212c; which results in the first, second, and third rotor blades 212a, 212b, 212c having different positions.

FIG. 5E illustrates yet another embodiment such that the position of the first, second, and third rotor blades 212a, 212b, 212c have been adjusted by the respective root blade actuator 252a, 252b, 252c. First and second rotor blades 212a, 212b are in the positions identified in FIG. 5D. The position of the third rotor blade 212c has been adjusted by root blade actuator 252c. For example, and not limitation, third rotor blade 212c has been adjusted substantially upward to greatly increase the pitch angle as compared to the pitch angle of the first and second rotor blades 212a, 212b.

FIGS. 5F-5G illustrate a blade root actuator 252a disposed in a root portion 212r of the rotor blade. In an embodiment, the blade root actuator 252a is disposed in a root portion 212r and outboard portion 220 of the rotor blade 212a. In an embodiment, root portion 212r can be a portion of a blade 212 that can extend in length from the blade root (e.g., adjacent to hub 204) to tip 224 and in width from leading edge 232 to about 3/4, 1/2, or 1/4 of the length of the total chord line (e.g., total chord line being a straight line connecting the leading and trailing edges 232, 228). FIG. 5F shows the first blade 212a having an unadjusted or conventional aerodynamic shape. Actuator 252a can adjust the shape of the rotor blade 212a by adjusting or otherwise moving the trailing edge 228 downward to modify the overall twisted shape of the blade 212a, which can counteract destabilizing forces thereon. In some embodiments actuator 252a can impart pivotal, rotational, or other mechanical motion on a twist control mechanism 252m configured to change the aerodynamic profile of at least a portion of the rotor blade 212a temporarily to counteract destabilizing forces thereon.

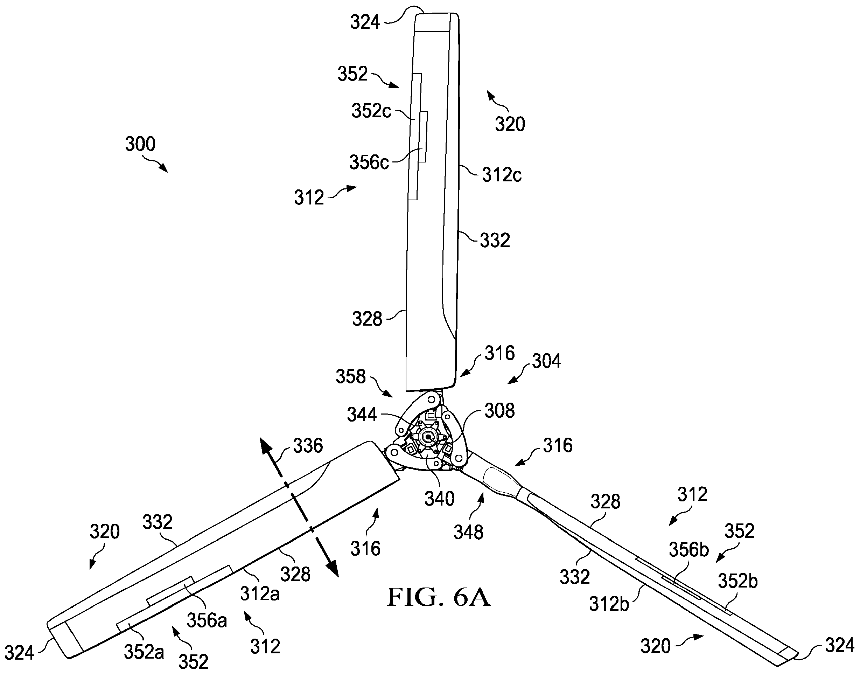

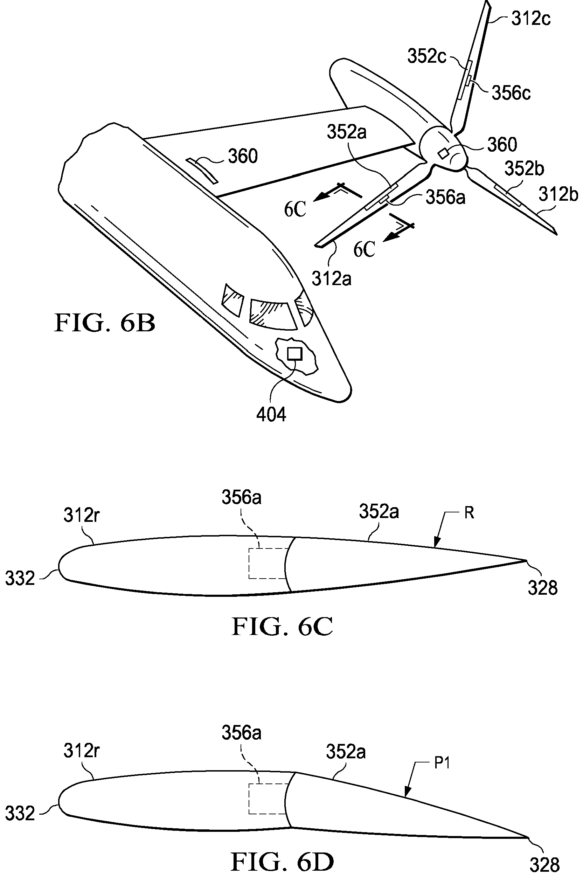

FIG. 6A depicts an alternate embodiment of a rotor assembly 300. Rotor assembly 300 is substantially similar in form and function to the rotor assembly 200, except as noted herein. Thus, disclosure herein regarding rotor assembly 200 is also applicable to assembly 300, except as noted herein. In the illustrated embodiment, rotor assembly 300 includes at least one blade flap 352 couplable to at least one of a plurality of rotor blades 312. The at least one blade flap 352 associated with a rotor blade 312 can counteract undesirable disturbances, shear forces, and movements encountered during operation. The features of the rotor assembly 300 can greatly reduce, and in some cases can eliminate, adverse forces exerted on wing 42 and/or propulsion system 50.

In other embodiments, each blade flap 352 can be coupled to a portion of at least one of plurality of rotor blade 312 (e.g., inboard portion 316). Each rotor blade 312 can include one blade flap 352 disposed on the trailing edge 328, as depicted in FIG. 6A, or more than one blade flap actuator 356 (e.g., two, three, four, five, six, or more) to, for example, achieve a desired adjustability of each rotor blade 312 (discussed in detail below), to ensure that at least one blade flap 352 is operational in the event that others of blade flap 352 fail, and the like. In some embodiments, flap 352 can extend from less than 10 percent to almost the entire length of the trailing edge 328 of the rotor blade 312. In another embodiment, flap 352 can extend a distance less than half the length of the trailing edge 328 of the rotor blade 312. In certain embodiments, flap 352 is located only on the trailing edge.

Flap 352 can comprise an aircraft control surface. In some embodiments, flap 352 can comprise at least one of the following: a winglet, an outboard aileron, an inboard aileron, a canoe fairing, an inboard flap, an outboard flap, spoiler and other control surfaces. In an embodiment, flap 352 can comprise at least one of the following: a plain flap, a slotted flap, a split flap, a zap flap, a fowler, and a double slotted flap. In some embodiments, flap 352 can have two, three, four or more positions. In an exemplary embodiment, in the fully retracted position, flap 352 can be referred to as up, at position one it can be extended by about 10 to about 15 degrees, at position two it can be extended about 15 to about 25 degrees, at position three it can be extended by about 20 to about 35 degrees, and at a down position the extension could be even up to 45 degrees.

Rotor assembly 300 includes at least one blade flap actuator 356 couplable to each of blade flaps 352. Each blade flap actuator 356 can be pneumatic, electrical, or mechanical. Though depicted exterior to each rotor blade 312 in FIG. 6A for illustration, blade flap actuators 356 can be exterior or interior to each rotor blade 312. Each rotor blade 312 can include one blade flap actuator 356, as depicted in FIG. 6A, or more than one blade flap actuator 356 (e.g., two, three, four, five, six, or more) to, for example, ensure that at least one blade flap actuator 356 is operational in the event that others of blade flap actuators 356 fail.

Each blade flap actuator 356 is configured to adjust blade flap 352 to which it corresponds independently of other blade flaps 352. For example, each blade flap actuator 356 can be configured to adjust blade flap 352 to which it corresponds such that blade flap 352 adjusts (or assists in adjusting, for example, by changing rotor blade aerodynamics and/or causing elastic twist of the rotor blade), whether permanently or temporarily, flapping position, other position, and/or shape of rotor blade 312 to which it corresponds. Such adjustment can include, for example, adjusting the aerodynamic wake of each rotor blade 312, which can assist in reducing noise produced by rotor assembly 300. The aerodynamics of a particular blade 312 can be modified by adjusting blade flap 352 to increase the area and shape of a rotor blade 312 to generate a downward force, which can be used to counteract an undesirable force on the blade 312 and/or aircraft 10. In an embodiment, blade flap actuator 356 adjusts the blade flap 352 to adjust the camber line and/or airfoil surface (to extend, shorten, or adjust the angle) of rotor blade 312.

Each of rotor blades 312 (and, more specifically, each of blade flaps 352) can be controlled by one or more corresponding blade flap actuators 356 independently of the other rotor blades 312 (and, more specifically, independently of the other blade flaps 352) such that each blade flap actuator 356 can adjust a corresponding rotor blade 312 (and, more specifically, a corresponding blade flap 352) the same as (e.g., to have the same blade angle and/or flapping position as) or different from (e.g., to have a different blade angle and/or flapping position from) each other rotor blade 312. In an embodiment, rotor assembly 300 can include swashplate control system 358, which includes the same or similar features as swashplate control system 152 depicted in FIG. 4B, such that rotor assembly 300 (and, more specifically, each of rotor blades 312) can be controlled in part by swashplate control system 358 and in part by at least one blade flap actuator 356 and corresponding blade flap 352, which is discussed in detail below. However, in other embodiments, rotor assembly 300 does not have swashplate control system 358 such that rotor assembly 300 is controlled by at least one blade flap actuator 356 and corresponding blade flap 352 and/or by other control features, such as those discussed with respect to rotor assembly 200.

In an embodiment, shown in FIGS. 6A-6B, first blade 312a includes a first blade actuator 356a associated with a first blade flap 352a, a second blade 312b includes a second blade actuator 356b associated with a second blade flap 352b, and a third blade 312c includes a third blade actuator 356c associated with a third blade flap 352c. Each of the first, second, and third flaps 352a, 352b, 352c can be adjusted independently of the others to counteract destabilizing forces during operation. First, second, and third blade flaps 352a, 352b, 352c are shown in the retracted or "up" position R as illustrated by FIG. 6C. First actuator 356a disposed in the root portion 312r can adjust first blade flap 352a such that the trailing edge 328 is oriented downward in a position P1, as shown in FIG. 6D, which adjusts the shape by increasing the airfoil area and changing the camber line of the first rotor blade 312a. In other embodiments, first blade flap 352a is adjusted further downward by first actuator 356a to further adjust the shape of the rotor blade 312, which can counteract destabilizing forces thereon. In other embodiments, first blade flap 352a can be a control surface that can adjust the trailing edge 328 upward to change the shape of the first blade, which can counteract destabilizing forces during operation. Blade flap 352a can change the aerodynamic forces on blade 312a as it rotates about the azimuth, which can adjust loads, vibration, performance, and stability thereof in a manner to counteract destabilizing forces.

One or more features of rotor assembly 200 can be used in combination with rotor assembly 300 to provide rotor assembly 300 with the same or similar features, control, and/or advantages of rotor assembly 200. Similarly, one or more features of rotor assembly 300 can be used in combination with rotor assembly 200 to provide rotor assembly 200 with the same or similar features, control, and/or advantages of rotor assembly 300.

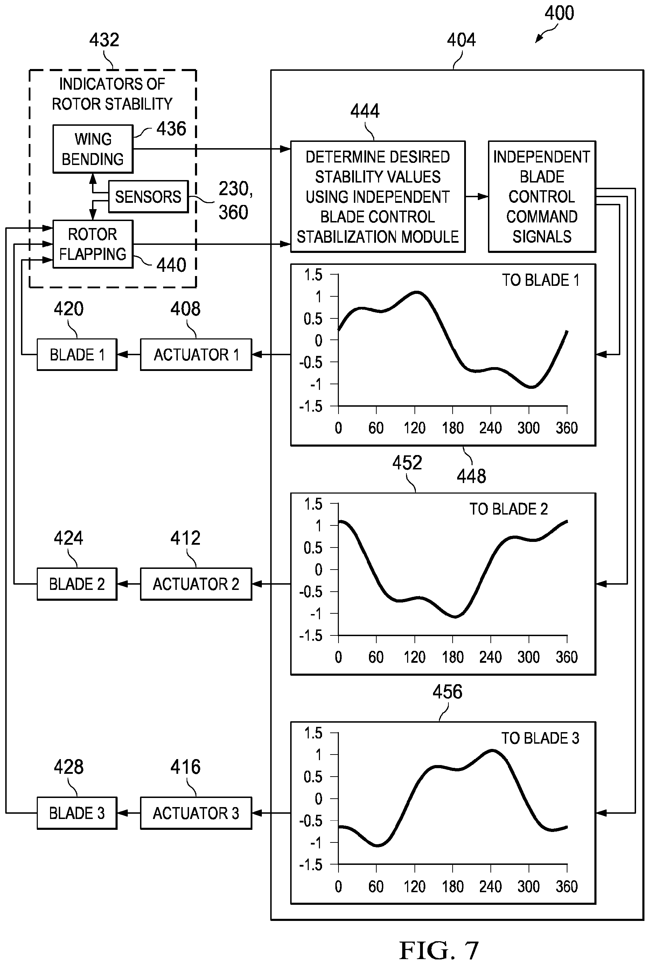

The rotor assemblies 200, 300 of this disclosure are controlled by one or more control systems, one example of which is control system 400 depicted in FIG. 7. Control system 400 can be configured to assist in accommodating forces on an aircraft, including forces due to atmospheric conditions near the aircraft (e.g., a gust) or due to movement or adjustment of the aircraft (e.g., a pilot maneuver or an automatic maneuver by an aircraft control system).

Referring now to FIG. 7, system 400 includes one or more processors and one or more storage media, which includes non-transitory computer-/machine-readable storage media. One or more storage media include instructions executable by one or more processors and are configured to cause one or more processors to perform a variety of operations. For example, system 400 includes controller 404, which can be one or more controllers, as described in detail below. Controller 404 is couplable to (and is depicted coupled to) at least one actuator (e.g., three actuators 408, 412, and 416, in the embodiment shown) and is configured to send signals to the at least one actuator to enable adjustment of a respective rotor blade (e.g., rotor blades 420, 424, 428, respectively) by the at least one actuator. Each of the actuators 408, 412, 416 can comprise at least one of the following: the blade root actuator 252 and the blade flap actuator 356. Each of the rotor blades 408, 412, 416 can comprise at least one of the following: the rotor blades 212 (e.g., first, second, and third blades 212a, 212b, 212c) and the rotor blades 312 (e.g., first, second, and third blades 312a, 312b, 312c).

In some embodiments, system 400 can have more than three rotor blades (and, in some embodiments, at least one actuator corresponding to each of the more than three rotor blades), such as four rotor blades, five rotor blades, or more. System 400 further incudes one or more sensors 432 which can comprise at least one or more of the following: sensors 260, sensors 360, wing bending sensors 436, and rotor flapping sensors 440. Sensors 436 can be configured to detect forces on an aircraft (such as forces on rotor blades 420, 424, 428 or forces on wings of a tiltrotor aircraft to which rotor blades 420, 424, 428 are coupled), such as forces associated with air movement over the aircraft due to atmospheric conditions near the aircraft (e.g., a gust) or due to movement or adjustment of the aircraft (e.g., a pilot maneuver or an automatic maneuver by an aircraft control system). For example, one or more wing bending sensors 436 can detect forces on wing 42, 46 of tiltrotor aircraft 10 to which rotor blades 420, 424, 428 are coupled, including bending forces, rotational forces, shear forces, and the like. As another example, flapping sensors 440 can, while simultaneously detecting adjustments made to rotor blades 420, 424, 428 by actuators 408, 412, 416, respectively, detect forces on rotor blades 420, 424, 428, including bending forces, rotational forces, shear forces, and the like. One or more of sensors 432 can be coupled to any portion of an aircraft (e.g., a rotor hub, a rotor blade, a wing, a fuselage, etc.) to enable one or more sensors 432 to detect relevant forces on the aircraft and/or portions thereof.

Sensors 432 are configured to send parameters that are detected by sensors 432 to controller 404 (or to have such parameters retrieved by controller 404). Controller 404 is configured to determine whether to adjust (and, if so, by how much) one or more rotor blades 420, 424, 428 via actuators 408, 412, 416, respectively, based, for example, on parameters sent by or retrieved from sensors 432. In the embodiment shown in FIG. 7, controller 404 includes an independent blade control stabilization module 444, which enables controller 404 to control each of rotor blades 420, 424, 428 independently of the others of rotor blades 420, 424, 428. For example, independent blade control stabilization module 444 can determine a first, second, third, or more desired stability value (such as, but not limited to, wing pitching, wing beam bending, and/or wing chord bending) based on at least in part from the forces identified by the sensors 432 (e.g., wing bending forces, twist forces, flapping forces, and the like). In an embodiment, the desired stability value is a destabilizing motion or force that occurs during flight that can be attenuated or overcome by actuating the actuators 408, 412, 416 to adjust the aerodynamics one or more rotor blades 420, 424, 428 independently of the others (e.g., actuating first blade 420 only; second blade 424 only; third blade 448 only; first blade and second blades 420, 424; first and third blades 420, 428; actuating first and second blades 424, 428; and second and third blades 424, 428). The independent blade control stabilization module 444 can then generate one or more control command signals 448, 452, 456 that corresponds to the desired stability value for the particular rotor blade 420, 424, 428, respectively. Each of rotor blades 420, 424, 428, respectively, receives and adjusts (if required) to an independent blade control command signal 448, 452, 456 to achieve the respective desired stability value. In operation, there will be a series, sequence, and/or a plurality of independent blade control command signals 448, 452, 456 as shown in FIG. 7. Independent blade control command signals 448, 452, 456 can be the same (e.g., separated by phase) or different, depending, for example, on the forces acting on the aircraft. Furthermore, independent blade control command signals 448, 452, 456 can be sinusoidal or non-sinusoidal (e.g., having any time variant shape, such as pulses, square waves, ramp waves, and the like), depending, for example, on the forces acting on the aircraft. For example, independent blade control command signals 448, 452, 456 can cause actuators 408, 412, and 416, respectively, to independently adjust rotor blades 420, 424, 428, respectively, such that the blade angle of rotor blades 420, 424, 428 are each the same at a given angular position during one rotation or such that the blade angle of one or more of rotor blades 420, 424, 428 are different at a given angular position during one rotation. As another example, at least one independent blade control command signal 448, 452, 456 can cause the actuators 408, 412, and 416, respectively, to adjust rotor blades 420, 424, 428, respectively, such that the aerodynamics of the rotor blades 420, 424, 428 is adjusted to achieve a desired stability value to increase whirl stability over conventional control methods (e.g., swashplate control systems). In an embodiment, the independent blade control command signals 420, 424, 428 can increase and decrease the blade angle (or pitch), flapping position, other position, and/or shape of a particular rotor blade 420, 424, 428 without restriction throughout one rotation. The independent adjustment of one or more rotor blades 420, 424, 428 impacts the aerodynamics of the aircraft (e.g., wing bending, rotor flapping), which can be identified by sensors 432. In this way, a feedback loop is formed for each of blades 420, 424, 428 to enable controller 404 to receive or retrieve information relating to forces on the aircraft via sensors 432, to determine whether to adjust rotor blades 420, 424, 428 in response to such information, and to generate signals to cause actuators 408, 412, and 416 to independently adjust rotor blades 420, 424, 428, respectively, if such an adjustment will assist in accommodating forces on the aircraft. New information relating to rotor blades 420, 424, 428 is then detected via one or more sensors based on the adjusted rotor blades 420, 424, 428 to enable controller 404 to again determine whether to adjust rotor blades 420, 424, 428 in response to such new information. System 400 can counteract destabilizing forces on rotor blades of aircraft 10, helicopter 51 that can decrease damage and failure, which can improve safety of the aircraft, decrease repair costs, and increase maximum air speeds.

The present disclosure further includes a method for stabilizing a tiltrotor aircraft 500 including a plurality of rotor blades, including a step 502 of identifying, with a sensor (e.g., sensor 432) forces on an aircraft; a step 504 of determining, by a controller (e.g., controller 404), a first desired stability value for a first rotor blade (e.g., first rotor blade 212a, 312a) based on at least in part on the forces on the aircraft; a step 506 of generating a first command signal (e.g., signal 448) to the first desired stability value to a first actuator (e.g., actuator 408) associated with the first rotor blade; and a step 508 of adjusting, with the first actuator (e.g. actuator 408), the first rotor blade (e.g., first blade 212a, 312a) independently of the other rotor blades (212b, 212c, 312b, 312c) to achieve the first desired stability value.

Method 500 can include a step 510 of determining, by a controller (e.g., controller 404), a second desired stability value for a second rotor blade (e.g., rotor blade 212b, 312b) based on at least in part on the forces on the aircraft; a step 512 of generating a second command signal (e.g., a signal different from the first command signal, signal 452) corresponding to the second desired stability value to a second actuator (e.g., actuator 412) associated with the second rotor blade (e.g., rotor blade 212b, 312b); and a step 514 of adjusting, with the second actuator (e.g., actuator 412), the second rotor blade (e.g., rotor blade 212b, 312b) independently of the other rotor blades (e.g., rotor blades 212a, 212c, 312a, 312c) to achieve the second desired stability value; wherein the first command signal (e.g., signal 448) and the second command signal (e.g., signal 452) are different.

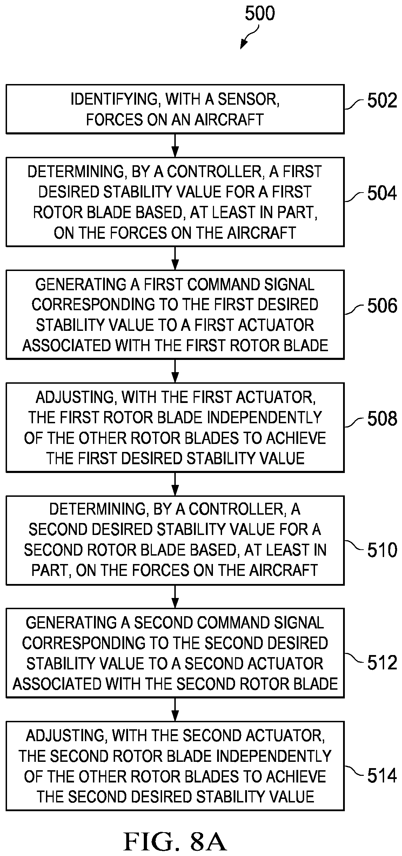

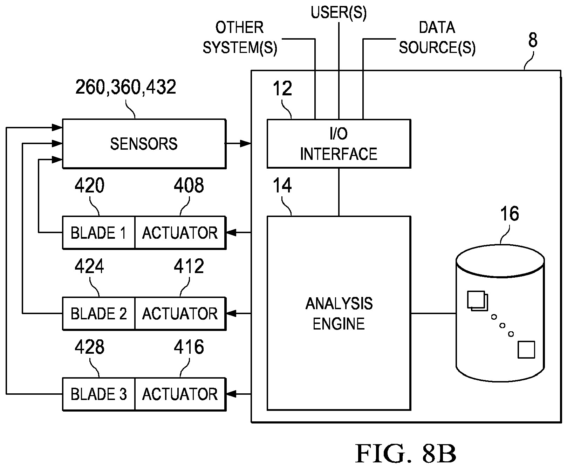

Referring now to FIG. 8B, sensors 432 (e.g., sensors 260, 360) can be connected to a computer system 8. The computer system 8 can receive input from sensors 432 and can include the independent blade control module 444, which can analyze and determine desired stability values and can generate a corresponding signal to the respective actuator (e.g., actuators 408, 412, 416) as a part of a feedback loop. The system 400 and computer system 8 can control the aerodynamic performance of an individual rotor blade (e.g. blade 420, 424, 428) by adjusting, moving, or otherwise modifying the blade angle (or pitch), flapping position, other position, and/or shape of the rotor blade, which can counteract some or all destabilizing rotor shear forces.

Computer system 8 can also be configured for performing one or more functions with regard to the operation of control system 400 including controller 404. Further, any processing and analysis can be partly or fully performed by computer system 8. Computer system 8 can be partly or fully integrated with other aircraft computer systems.

Computer system 8 can include an input/output (I/O) interface 12, an analysis engine 14, and a database 16. Alternative embodiments can combine or distribute the input/output (I/O) interface 12, analysis engine 14, and database 16, as desired. Embodiments of the system 8 can include one or more computers that include one or more processors and memories configured for performing tasks described herein. This can include, for example, a computer having a central processing unit (CPU) and non-volatile memory that stores software instructions for instructing the CPU to perform at least some of the tasks described herein. This can also include, for example, two or more computers that are in communication via a computer network, where one or more of the computers include a CPU and non-volatile memory, and one or more of the computer's non-volatile memory stores software instructions for instructing any of the CPU(s) to perform any of the tasks described herein. Thus, while the exemplary embodiment is described in terms of a discrete machine, it should be appreciated that this description is non-limiting, and that the present description applies equally to numerous other arrangements involving one or more machines performing tasks distributed in any way among the one or more machines. It should also be appreciated that such machines need not be dedicated to performing tasks described herein, but instead can be multi-purpose machines, for example computer workstations, that are suitable for also performing other tasks.

The I/O interface 12 can provide a communication link between external users, systems, and data sources and components of the system 8. The I/O interface 12 can be configured for allowing one or more users to input information to the system 8 via any known input device. Examples can include a keyboard, mouse, touch screen, and/or any other desired input device. The I/O interface 12 can be configured for allowing one or more users to receive information output from the system 8 via any known output device. Examples can include a display monitor, a printer, cockpit display, and/or any other desired output device. The I/O interface 12 can be configured for allowing other systems to communicate with the system 8. For example, the I/O interface 12 can allow one or more remote computer(s) to access information, input information, and/or remotely instruct the system 8 to perform one or more of the tasks described herein. The I/O interface 12 can be configured for allowing communication with one or more remote data sources. For example, the I/O interface 12 can allow one or more remote data source(s) to access information, input information, and/or remotely instruct the system 8 to perform one or more of the tasks described herein.

The database 16 provides persistent data storage for system 8. While the term "database" is primarily used, a memory or other suitable data storage arrangement may provide the functionality of the database 16. In alternative embodiments, the database 16 can be integral to or separate from the system 8 and can operate on one or more computers. The database 16 preferably provides non-volatile data storage for any information suitable to support the operation of rotor assembly 200, rotor assembly 300, and/or control system 400, including various types of data. The analysis engine 14 can include various combinations of one or more processors, memories, and software components.

The systems and controllers of the present disclosure include any one or more electronic devices configured or configurable to perform the operations described in this disclosure. The systems and controllers described in this disclosure include computer systems, and the functions described in this disclosure may be implemented or performed with one or more components, whether or not explicitly designated or labeled as one or more components, such as with a general-purpose processor, a digital signal processor (DSP), an application specific integrated circuit (ASIC), a field programmable gate array (FPGA), or other programmable logic device, discrete gate or transistor logic, discrete hardware components, or any combination thereof. A general-purpose processor may be a microprocessor, but in the alternative, the processor may be any conventional processor, controller, microcontroller, or state machine. A processor may also be implemented as a combination of computing devices, such as a combination of a DSP and a microprocessor, a plurality of microprocessors, one or more microprocessors in conjunction with a DSP core, or any other such configuration.

The systems and controllers of the present disclosure can include a communication interface configured to communicatively couple the systems and controllers to one or more networks, such as via a wireless connection established according to one or more communication protocols or standards.

The steps, methods, or algorithms described in this disclosure may be embodied directly in hardware (e.g., circuitry), in programmable circuitry appropriately programmed with software and/or firmware, such as in a software module executed by a processor, or in a combination of the two. A software module may reside in random access memory (RAM), flash memory, read only memory (ROM), erasable programmable read only memory (EPROM), electrically erasable programmable read only memory (EEPROM), magneto- resistive random access memory (MRAM), registers, cache memory, optical memory, hard disk, a removable disk, solid state drives (SSDs), or any other form of storage medium, such as any memory device configured to store data in a persistent or non- persistent state, or a combination thereof.

A storage medium may be any available medium that can be accessed by a general-purpose or special-purpose computer or processor. An exemplary storage medium is coupled to a processor such that the processor can read information from, and write information to, the storage medium.

An embodiment provides a stabilization system for a tiltrotor aircraft including a plurality of rotor blades, including a processor; and a non-transitory computer-readable medium comprising one or more processor-executable components, the one or more processor-executable components configured to be executed by the processor to cause the system to: identify, with a sensor (e.g., sensor 432), forces on a tiltrotor aircraft 10; determine a first desired stability value for a first rotor blade (e.g., rotor blade 420) based at least in part on the forces on the tiltrotor aircraft; generate a first command signal (e.g., signal 448) corresponding to the first desired stability value to a first actuator (e.g., actuator 408) to cause the first actuator to adjust a portion of a first rotor blade independently of other rotor blades; determine a second desired stability value for a second rotor blade (e.g., rotor blade 424) based at least in part on the forces on the tiltrotor aircraft 10; and generating a second command signal (e.g., signal 452) corresponding to the second desired stability value to a second actuator (e.g., actuator 412) to cause the second actuator to adjust a portion of a second rotor blade independently of the other rotor blades; wherein the first and second command signal are different. In an embodiment, adjusting a portion of the rotor blade means to adjust at least some of the blade angle (or pitch), flapping position, and/or shape of a particular rotor blade. In an embodiment, the first and second command signals are non-sinusoidal.

The rotor assemblies, control systems, and other features detailed above provide numerous advantages to aircrafts. For example, rotor assemblies and control systems configured in accordance with the above disclosure can significantly improve control over an aircraft by, for example, enabling independent control of each rotor blade or a portion thereof and by permitting three or more rotor blades. Improved control over an aircraft via independent control of each rotor blade and/or increasing the number of rotor blades permits the development of rotor assemblies and, ultimately, aircrafts that can better accommodate forces on portions of the aircraft, such as destabilizing forces that can lead to damage and failure of various components of the aircraft. Improved management of destabilizing forces can decrease damage and failure, which can improve safety of the aircraft, decrease repair costs, and increase maximum air speeds.

The terms "a" and "an" are defined as one or more unless this disclosure explicitly requires otherwise.

The term "substantially" is defined as largely, but not necessarily wholly, what is specified (and includes what is specified; e.g., substantially 90 degrees includes 90 degrees), as understood by a person of ordinary skill in the art. In any disclosed embodiment, the terms "substantially," "approximately," and "about" may be substituted with "within [a percentage] of" what is specified, where the percentage includes 0.1, 1, 5, and 10 percent.

Terms such as "first" and "second" are used only to differentiate features and not to limit the different features to a particular order or to a particular quantity.

Where numerical ranges or limitations are expressly stated, such express ranges or limitations should be understood to include iterative ranges or limitations of like magnitude falling within the expressly stated ranges or limitations (e.g., from about 1 to about 10 includes 2, 3, 4, etc.; greater than 0.10 includes 0.11, 0.12, 0.13, etc.). For example, whenever a numerical range with a lower limit, Rₗ, and an upper, Rᵤ, is disclosed, any number falling within the range is specifically disclosed. In particular, the following numbers within the range are specifically disclosed: R=Rₗ+k*(Rᵤ-Rₗ), wherein k is a variable ranging from 1 percent to 100 percent with a 1 percent increment, i.e., k is 1 percent, 2 percent, 3 percent, 4 percent, 5 percent, ..., 50 percent, 51 percent, 52 percent, ... , 95 percent, 96 percent, 97 percent, 98 percent, 99 percent, or 100 percent. Any numerical range defined by two R numbers as defined in the above is also specifically disclosed and includes the two R numbers.

Use of the term "optionally" with respect to any element of a claim means that the element is required, or alternatively, the element is not required, both alternatives being within the scope of the claim.

Use of broader terms such as comprises, includes, and has (and any derivatives of such terms, such as comprising, including, and having) should be understood to provide support for narrower terms, such as consisting of, consisting essentially of, and comprised substantially of. Thus, in any of the claims, the term "consisting of," "consisting essentially of," or "comprised substantially of" can be substituted for any of the open-ended linking verbs recited above in order to change the scope of a given claim from what it would otherwise be using the open-ended linking verb.

The same or similar features of one or more embodiments are sometimes referred to with the same reference numerals within a figure or among figures. However, one or more features having the same reference numeral should not be construed to indicate that any feature is limited to the characteristics of another feature having the same reference numeral, or that any feature cannot already have, or cannot be modified to have, features that are different from another feature having the same reference numeral.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. The feature or features of one embodiment may be applied to other embodiments to achieve still other embodiments, even though not described, unless expressly prohibited by this disclosure or the nature of the embodiments. The scope of protection is not limited by the description set out above but is defined by the claims that follow.

The claims are not intended to include, and should not be interpreted to include, means-plus- or step-plus-function limitations, unless such a limitation is explicitly recited in a given claim using the phrase(s) "means for" or "step for," respectively.

## Claims

1. A rotor assembly (200) comprising:
a hub (204) configured to be coupled to an aircraft (10);
a plurality of rotor blades (212) configured to extend laterally from the hub (204) and to rotate about the hub (204), each of the rotor blades (212) comprising an inboard end (216) having a root portion (212r) and an outboard end (220);
at least one blade root actuator (252a) disposed in the root portion (212r) of the respective rotor blade (212a), the at least one blade root actuator (252a) configured to adjust at least one of the plurality of rotor blades (212) independently of the other rotor blades (212) to accommodate forces on the aircraft (10);
at least one controller (404) coupled to the at least one blade root actuator (252a) and configured to send a signal to the at least one blade root actuator (252a) to enable adjustment of the at least one of the plurality of rotor blades (212);
at least one blade flap (352) coupled to a trailing edge (328) of at least one of the plurality of rotor blades (212), the at least one blade flap (352) extending almost the entire length of the trailing edge (328); and
at least one blade flap actuator (356) coupled to the at least one blade flap (352) and configured to adjust the at least one blade flap (352) to accommodate forces on the aircraft (10);
wherein the at least one controller (404) is coupled to the at least one blade flap actuator (356) and configured to enable the blade flap actuator (356) to adjust the at least one blade flap (352) independently of the other blade flaps.

2. The rotor assembly of claim 1, further comprising:
at least one sensor (432) configured to detect at least one of rotor whirl, rotor flapping, and wing bending;
wherein the at least one controller (404) is configured to enable the at least one root blade actuator (252a) to adjust the at least one rotor blade (212a) independently of the other rotor blades (212) in response to detections of the at least one sensor (432)
wherein the at least one controller (404) is coupled to the at least one blade flap actuator (356) and configured to enable the blade flap actuator (356) to adjust the at least one blade flap (352) independently of the other blade flaps, in response to detections of the at least one sensor (432).

3. The rotor assembly of claim 1, wherein the at least one controller (404) is configured to enable the at least one blade root actuator (252a) to adjust the at least one rotor blade (212a) with a non-sinusoidal command signal.

4. The rotor assembly of claim 1, wherein the assembly comprises:
at least one blade root actuator (252a) configured to adjust each of the plurality of rotor blades (212) independently of the other rotor blades (212) to accommodate forces on the aircraft (10);
wherein the at least one controller (404) is coupled to each blade root actuator (252a) and configured to send a signal to each blade root actuator (252a) to enable adjustment of each of the plurality of rotor blades (212), and optionally or
preferably, wherein the at least one controller (404) is configured to enable each blade root actuator (252a) to adjust each rotor blade (212) with a command signal, wherein the command signal is a non-sinusoidal command signal, and wherein the command signal for each rotor blade (212) is different from the other rotor blades (212).

5. The rotor assembly of claim 1, wherein the at least one blade root actuator (252a) is configured to impart motion to a twist control mechanism (252m) disposed in at least one of the plurality of rotor blades (212), the twist control mechanism (252m) configured to change the aerodynamic profile of at least a portion of at least one of the plurality of rotor blades (212).

6. The rotor assembly of claim 5, wherein the twist control mechanism (252m) is configured to change the aerodynamic profile of at least a portion of at least one of the plurality of rotor blades (212) to counteract destabilizing forces thereon.

7. The rotor assembly of claim 1, wherein the at least one controller (404) is configured to enable the at least one blade flap actuator (356) to adjust at least one of blade pitch and blade flapping position by adjusting the at least one blade flap (352).

8. The rotor assembly of claim 1, wherein the at least one blade flap (352) coupled to the outboard end (220) of at least one of the plurality of rotor blades (212).

9. The rotor assembly of claim 2, wherein the at least one controller (404) is configured to enable the at least one blade flap actuator (356) to adjust each blade flap (352) with a command signal, and wherein the command signal for each blade flap (352) is different from the other blade flaps (352).

10. A method for stabilizing a tiltrotor aircraft (10) during operation, the tiltrotor aircraft (10) including a plurality of rotor blades (212), each of the rotor blades (212) comprising an inboard end (216) having a root portion (212r) and an outboard end (220), comprising:
identifying, with a sensor (432), forces on an aircraft (10);
determining, by a controller (404), a first desired stability value for a first rotor blade (212a) based on at least in part on the forces on the aircraft (10);
generating a first command signal corresponding to the first desired stability value to a first actuator (252a) disposed in the root portion (212r) and associated with the first rotor blade (212a);
adjusting, with the first actuator (252a), the first rotor blade (212a) independently of the other rotor blades (212) to achieve the first desired stability value, the adjusting step comprises adjusting the pitch of the first rotor blade (212a);
determining, by a controller (404), a second desired stability value for a second rotor blade (212b) based on at least in part on the forces on the aircraft (10);
generating a second command signal corresponding to the second desired stability value to a second actuator (252b) comprising a flap actuator (356) associated with the second rotor blade (212b); and
adjusting, with the flap actuator (356), a flap (352) coupled to a trailing edge (328) of the second rotor blade (212b) independently of the other rotor blades (212) to achieve the second desired stability value, the flap (352) extends almost the entire length of the trailing edge (328);
wherein the first command signal and the second command signal are different.

11. A stabilization system for a tiltrotor aircraft (10) including a plurality of rotor blades (212), each of the rotor blades (212) comprising an inboard end (216) having a root portion (212r) and an outboard end (220), comprising:
a processor; and
a non-transitory computer-readable medium comprising one or more processor-executable components, the one or more processor-executable components configured to be executed by the processor to cause the system to:
identify, with a sensor (432), forces on the tiltrotor aircraft (10);
determine a first desired stability value for a first rotor blade (212a) based at least in part on the forces on the tiltrotor aircraft (10);
generate a first command signal corresponding to the first desired stability value to a first actuator (252a) disposed in the root portion (212r) of the first rotor blade (212a) to cause the first actuator (252a) to adjust a portion of a first rotor blade (212a) independently of the other rotor blades (212);
determine a second desired stability value for a second rotor blade (212b) based at least in part on the forces on the tiltrotor aircraft (10); and
generate a second command signal corresponding to the second desired stability value to a second actuator (252b) comprising a flap actuator (356) to cause the flap actuator (356) to adjust a flap (352) coupled to a trailing edge (328) of the second rotor blade (212b) independently of the other rotor blades (212), the flap (352) extends almost the entire length of the trailing edge (328);
wherein the first and second command signal are different.

12. The system of claim 11, wherein the first and second command signals are non-sinusoidal.

## Patentansprüche

1. Rotoranordnung (200), die Folgendes umfasst:
eine Nabe (204), dazu ausgelegt, mit einem Luftfahrzeug (10) gekoppelt zu werden;
mehrere Rotorblätter (212), dazu ausgelegt, sich lateral von der Nabe (204) aus zu erstrecken und um die Nabe (204) zu rotieren, wobei jedes der Rotorblätter (212) ein inneres Ende (216) mit einem Wurzelteil (212r) und ein äußeres Ende (220) aufweist;
zumindest einen Blattwurzelaktuator (252a), angeordnet im Wurzelteil (212r) des entsprechenden Rotorblatts (212a), wobei der zumindest eine Blattwurzelaktuator (252a) dazu ausgelegt ist, zumindest eines der mehreren Rotorblätter (212) unabhängig von den anderen Rotorblättern (212) einzustellen, um Kräfte am Luftfahrzeug (10) aufzunehmen;
zumindest eine Steuerung (404), gekoppelt mit zumindest einem Blattwurzelaktuator (252a) und ausgelegt zum Senden eines Signals an den zumindest einen Blattwurzelaktuator (252a) zum Ermöglichen einer Einstellung des zumindest einen der mehreren Rotorblätter (212);
zumindest eine Blattklappe (352), gekoppelt mit einer Hinterkante (328) von zumindest einem der mehreren Rotorblätter (212), wobei sich die zumindest eine Blattklappe (352) über fast die gesamte Länge der Hinterkante (328) erstreckt; und
zumindest einen Blattklappenaktuator (356), gekoppelt mit der zumindest einen Blattklappe (352) und dazu ausgelegt, die zumindest eine Blattklappe (352) einzustellen, um Kräfte am Luftfahrzeug (10) aufzunehmen;
wobei die zumindest eine Steuerung (404) mit dem zumindest einen Blattklappenaktuator (356) gekoppelt und dazu ausgelegt ist, dem Blattklappenaktuator (356) zu ermöglichen, die zumindest eine Blattklappe (352) unabhängig von den anderen Blattklappen einzustellen.

2. Rotoranordnung nach Anspruch 1, die ferner Folgendes umfasst:
zumindest einen Sensor (432), ausgelegt zum Detektieren von zumindest einem aus einem Rotorwirbeln, einem Rotorschlagen und einem Flügelbiegen;
wobei die zumindest eine Steuerung (404) dazu ausgelegt ist, dem zumindest einen Blattwurzelaktuator (252a) zu ermöglichen, das zumindest eine Rotorblatt (212a) unabhängig von den anderen Rotorblättern (212) einzustellen in Reaktion auf Detektionen des zumindest einen Sensors (432),
wobei die zumindest eine Steuerung (404) mit dem zumindest einen Blattklappenaktuator (356) gekoppelt und dazu ausgelegt ist, dem Blattklappenaktuator (356) zu ermöglichen, die zumindest eine Blattklappe (352) unabhängig von den anderen Blattklappen einzustellen in Reaktion auf Detektionen des zumindest einen Sensors (432) .

3. Rotoranordnung nach Anspruch 1, wobei die zumindest eine Steuerung (404) dazu ausgelegt ist, dem zumindest einen Blattwurzelaktuator (252a) zu ermöglichen, das zumindest eine Rotorblatt (212a) mit einem nichtsinusförmigen Befehlssignal einzustellen.

4. Rotoranordnung nach Anspruch 1, wobei die Anordnung Folgendes umfasst:
zumindest einen Blattwurzelaktuator (252a), dazu ausgelegt, jedes der mehreren Rotorblätter (212) unabhängig von den anderen Rotorblättern (212) einzustellen, um Kräfte am Luftfahrzeug (10) aufzunehmen;
wobei die zumindest eine Steuerung (404) mit jedem Blattwurzelaktuator (252a) gekoppelt ist und ausgelegt ist zum Senden eines Signals an jeden Blattwurzelaktuator (252a) zum Ermöglichen einer Einstellung jedes der mehreren Rotorblätter (212), und wobei optional oder vorzugsweise
die zumindest eine Steuerung (404) dazu ausgelegt ist, jedem Blattwurzelaktuator (252a) zu ermöglichen, jedes Rotorblatt (212) mit einem Befehlssignal einzustellen, wobei das Befehlssignal ein nicht-sinusförmiges Befehlssignal ist, und wobei das Befehlssignal für jedes Rotorblatt (212) von den anderen Rotorblättern (212) verschieden ist.

5. Rotoranordnung nach Anspruch 1, wobei der zumindest eine Blattwurzelaktuator (252a) dazu ausgelegt ist, einem Verwindungssteuerungsmechanismus (252m), der in zumindest einem der mehreren Rotorblätter (212) angeordnet ist, Bewegung zu verleihen, wobei der Verwindungssteuerungsmechanismus (252m) dazu ausgelegt ist, das aerodynamische Profil von zumindest einem Teil von zumindest einem der mehreren Rotorblätter (212) zu ändern.

6. Rotoranordnung nach Anspruch 5, wobei der Verwindungssteuerungsmechanismus (252m) dazu ausgelegt ist, das aerodynamische Profil von zumindest einem Teil von zumindest einem der mehreren Rotorblätter (212) zu ändern, um destabilisierenden Kräften darauf entgegenzuwirken.

7. Rotoranordnung nach Anspruch 1, wobei die zumindest eine Steuerung (404) dazu ausgelegt ist, dem zumindest einem Blattklappenaktuator (356) zu ermöglichen, zumindest eines aus einer Blattsteigung und einer Blattklappenposition einzustellen durch Einstellen der zumindest einen Blattklappe (352).

8. Rotoranordnung nach Anspruch 1, wobei die zumindest eine Blattklappe (352) mit dem äußeren Ende (220) von zumindest einem der mehreren Rotorblätter (212) gekoppelt ist.

9. Rotoranordnung nach Anspruch 2, wobei die zumindest eine Steuerung (404) dazu ausgelegt ist, dem zumindest einen Blattklappenaktuator (356) zu ermöglichen, jede Blattklappe (352) mit einem Befehlssignal einzustellen, und wobei das Befehlssignal für jede Blattklappe (352) von den anderen Blattklappen (352) verschieden ist.

10. Verfahren zum Stabilisieren eines Kipprotor-Luftfahrzeugs (10) während des Betriebs, wobei das Kipprotor-Luftfahrzeug (10) mehrere Rotorblätter (212) umfasst, wobei jedes der Rotorblätter (212) ein inneres Ende (216) mit einem Wurzelteil (212r) und ein äußeres Ende (220) aufweist, Folgendes umfassend:
Identifizieren, mit einem Sensor (432), von Kräften an einem Luftfahrzeug (10);
Bestimmen, durch eine Steuerung (404), eines ersten gewünschten Stabilitätswerts für ein erstes Rotorblatt (212a) zumindest teilweise basierend auf den Kräften am Luftfahrzeug (10);
Erzeugen eines ersten Befehlssignals entsprechend dem ersten gewünschten Stabilitätswert an einen ersten Aktuator (252a), angeordnet im Wurzelteil (212r) und verbunden mit dem ersten Rotorblatt (212a);
Einstellen, mit dem ersten Aktuator (252a), des ersten Rotorblatts (212a) unabhängig von den anderen Rotorblättern (212), um den ersten gewünschten Stabilitätswert zu erreichen, wobei der Einstellschritt Einstellen der Steigung des ersten Rotorblatts (212a) umfasst;
Bestimmen, durch eine Steuerung (404), eines zweiten gewünschten Stabilitätswerts für ein zweites Rotorblatt (212b) zumindest teilweise basierend auf den Kräften am Luftfahrzeug (10);
Erzeugen eines zweiten Befehlssignals entsprechend dem zweiten gewünschten Stabilitätswert an einen zweiten Aktuator (252b), umfassend einen Klappenaktuator (356) in Verbindung mit dem zweiten Rotorblatt (212b); und
Einstellen, mit dem Klappenaktuator (356), einer Klappe (352), gekoppelt mit einer Hinterkante (328) des zweiten Rotorblatts (212b) unabhängig von den anderen Rotorblättern (212), um den zweiten gewünschten Stabilitätswert zu erreichen, wobei sich die Klappe (352) über fast die gesamte Länge der Hinterkante (328) erstreckt;
wobei das erste Befehlssignal und das zweite Befehlssignal unterschiedlich sind.

11. Stabilisierungssystem für ein Kipprotor-Luftfahrzeug (10), umfassend mehrere Rotorblätter (212), wobei jedes der Rotorblätter (212) ein inneres Ende (216) mit einem Wurzelteil (212r) und ein äußeres Ende (220) aufweist, Folgendes umfassend:
einen Prozessor; und
ein nicht-flüchtiges computerlesbares Medium, umfassend eine oder mehrere prozessorausführbare Komponenten, wobei die eine oder mehreren prozessorausführbaren Komponenten dazu ausgelegt sind, durch den Prozessor ausgeführt zu werden, um das System zu veranlassen zum:
Identifizieren, mit einem Sensor (432), von Kräften an einem Kipprotor-Luftfahrzeug (10);
Bestimmen eines ersten gewünschten Stabilitätswerts für ein erstes Rotorblatt (212a) zumindest teilweise basierend auf den Kräften am Kipprotor-Luftfahrzeug (10);
Erzeugen eines ersten Befehlssignals entsprechend dem ersten gewünschten Stabilitätswert an einen ersten Aktuator (252a), angeordnet im Wurzelteil (212r) des ersten Rotorblatts (212a), um den ersten Aktuator (252a) zu veranlassen, einen Teil eines ersten Rotorblatts (212a) unabhängig von den anderen Rotorblättern (212) einzustellen;
Bestimmen eines zweiten gewünschten Stabilitätswerts für ein zweites Rotorblatt (212b) zumindest teilweise basierend auf den Kräften am Kipprotor-Luftfahrzeug (10); und
Erzeugen eines zweiten Befehlssignals entsprechend dem zweiten gewünschten Stabilitätswert an einen zweiten Aktuator (252b), umfassend einen Klappenaktuator (356), um den Klappenaktuator (356) zu veranlassen, eine Klappe (352), die mit einer Hinterkante (328) des zweiten Rotorblatts (212b) gekoppelt ist, unabhängig von den anderen Rotorblättern (212) einzustellen, wobei sich die Klappe (352) über fast die gesamte Länge der Hinterkante (328) erstreckt;
wobei das erste und das zweite Befehlssignal unterschiedlich sind.

12. System nach Anspruch 11, wobei das erste und das zweite Befehlssignal nicht-sinusförmig sind.

## Revendications

1. Ensemble de rotor (200) comprenant :
un moyeu (204) configuré pour être couplé à un aéronef (10) ;
une pluralité de pales de rotor (212) configurées pour s'étendre latéralement à partir le moyeu (204) et pour tourner autour du moyeu (204), chacune des pales de rotor (212) comprenant une extrémité intérieure (216) ayant une partie d'emplanture (212r) et une extrémité extérieure (220) ;
au moins un actionneur d'emplanture de pale (252a) disposé dans la partie d'emplanture (212r) de la pale de rotor respective (212a), l'au moins un actionneur d'emplanture de pale (252a) étant configuré pour ajuster au moins une de la pluralité de pales de rotor (212) indépendamment des autres pales de rotor (212) afin de s'adapter aux forces s'exerçant sur l'aéronef (10) ;
au moins un dispositif de commande (404) couplé à l'au moins un actionneur d'emplanture de pale (252a) et configuré pour envoyer un signal à l'au moins un actionneur d'emplanture de pale (252a) pour permettre l'ajustement de l'au moins une de la pluralité de pales de rotor (212) ;
au moins un volet de pale (352) couplé à un bord de fuite (328) d'au moins une de la pluralité de pales de rotor (212), l'au moins un volet de pale (352) s'étendant sur presque toute la longueur du bord de fuite (328) ; et
au moins un actionneur de volet de pale (356) couplé à l'au moins un volet de pale (352) et configuré pour ajuster l'au moins un volet de pale (352) afin s'adapter aux forces s'exerçant sur l'aéronef (10) ;
l'au moins un dispositif de commande (404) étant couplé à l'au moins un actionneur de volet de pale (356) et configuré pour permettre à l'actionneur de volet de pale (356) d'ajuster l'au moins un volet de pale (352) indépendamment des autres volets de pale.

2. Ensemble de rotor selon la revendication 1, comprenant en outre :
au moins un capteur (432) configuré pour détecter au moins l'un des phénomènes suivants : tourbillonnement du rotor, battement du rotor et flexion des ailes ;
l'au moins un dispositif de commande (404) étant configuré pour permettre à l'au moins un actionneur de pale d'emplanture (252a) d'ajuster l'au moins une pale de rotor (212a) indépendamment des autres pales de rotor (212) en réponse aux détections de l'au moins un capteur (432) ;
l'au moins un dispositif de commande (404) étant couplé à l'au moins un actionneur de volet de pale (356) et configuré pour permettre à l'actionneur de volet de pale (356) d'ajuster l'au moins un volet de pale (352) indépendamment des autres volets de pale, en réponse aux détections de l'au moins un capteur (432).

3. Ensemble de rotor selon la revendication 1, l'au moins un dispositif de commande (404) étant configuré pour permettre à l'au moins un actionneur d'emplanture de pale (252a) d'ajuster l'au moins une pale de rotor (212a) avec un signal de commande non sinusoïdal.

4. Ensemble de rotor selon la revendication 1, l'ensemble comprenant :
au moins un actionneur d'emplanture de pale (252a) configuré pour ajuster chacune de la pluralité de pales de rotor (212) indépendamment des autres pales de rotor (212) afin de s'adapter aux forces s'exerçant sur l'aéronef (10) ;
l'au moins un dispositif de commande (404) étant couplé à chaque actionneur d'emplanture de pale (252a) et configuré pour envoyer un signal à chaque actionneur d'emplanture de pale (252a) pour permettre l'ajustement de chacune de la pluralité de pales de rotor (212), et de manière optionnelle ou de préférence,
l'au moins un dispositif de commande (404) étant configuré pour permettre à chaque actionneur d'emplanture de pale (252a) d'ajuster chaque pale de rotor (212) avec un signal de commande, le signal de commande étant un signal de commande non sinusoïdal, et le signal de commande pour chaque pale de rotor (212) étant différent des autres pales de rotor (212).

5. Ensemble de rotor selon la revendication 1, l'au moins un actionneur d'emplanture de pale (252a) étant configuré pour communiquer un mouvement à un mécanisme de commande de torsion (252m) disposé dans au moins une de la pluralité de pales de rotor (212), le mécanisme de commande de torsion (252m) étant configuré pour modifier le profil aérodynamique d'au moins une partie d'au moins une de la pluralité de pales de rotor (212).

6. Ensemble de rotor selon la revendication 5, le mécanisme de commande de torsion (252m) étant configuré pour modifier le profil aérodynamique d'au moins une partie d'au moins une de la pluralité de pales de rotor (212) afin de contrecarrer les forces déstabilisantes sur celles-ci.

7. Ensemble de rotor selon la revendication 1, l'au moins un dispositif de commande (404) étant configuré pour permettre à l'au moins un actionneur de volet de pale (356) d'ajuster au moins l'un du pas de la pale et de la position de battement de pale en ajustant l'au moins un volet de pale (352).

8. Ensemble de rotor selon la revendication 1, l'au moins un volet de pale (352) étant couplé à l'extrémité extérieure (220) d'au moins une de la pluralité de pales de rotor (212).

9. Ensemble de rotor selon la revendication 2, l'au moins un dispositif de commande (404) étant configuré pour permettre à l'au moins un actionneur de volet de pale (356) d'ajuster chaque volet de pale (352) avec un signal de commande, et le signal de commande pour chaque volet de pale (352) étant différent des autres volets de pale (352).

10. Procédé pour stabiliser un aéronef à rotors basculants (10) pendant le fonctionnement, l'aéronef à rotors basculants (10) comprenant une pluralité de pales de rotor (212), chacune des pales de rotor (212) comprenant une extrémité intérieure (216) ayant une partie d'emplanture (212r) et une extrémité extérieure (220), comprenant :
l'identification, à l'aide d'un capteur (432), des forces s'exerçant sur un aéronef (10) ;
la détermination, par un dispositif de commande (404), d'une première valeur de stabilité souhaitée pour une première pale de rotor (212a), sur la base au moins en partie des forces exercées sur l'aéronef (10) ;
la génération d'un premier signal de commande correspondant à la première valeur de stabilité souhaitée à un premier actionneur (252a) disposé dans la partie d'emplanture (212r) et associé à la première pale de rotor (212a) ;
l'ajustement, avec le premier actionneur (252a), de la première pale de rotor (212a) indépendamment des autres pales de rotor (212) pour obtenir la première valeur de stabilité souhaitée, l'étape d'ajustement comprenant l'ajustement du pas de la première pale de rotor (212a) ;
la détermination, par un dispositif de commande (404), d'une seconde valeur de stabilité souhaitée pour une seconde pale de rotor (212b) sur la base, au moins en partie, des forces s'exerçant sur l'aéronef (10) ;
la génération d'un second signal de commande correspondant à la seconde valeur de stabilité souhaitée à un second actionneur (252b) comprenant un actionneur de volet (356) associé à la seconde pale de rotor (212b) ; et
l'ajustement, avec l'actionneur de volet (356), d'un volet (352) couplé à un bord de fuite (328) de la seconde pale de rotor (212b) indépendamment des autres pales de rotor (212) pour obtenir la seconde valeur de stabilité souhaitée, le volet (352) s'étendant sur presque toute la longueur du bord de fuite (328) ;
le premier signal de commande et le second signal de commande étant différents.

11. Système de stabilisation pour un aéronef à rotors basculants (10) comprenant une pluralité de pales de rotor (212), chacune des pales de rotor (212) comprenant une extrémité intérieure (216) ayant une partie d'emplanture (212r) et une extrémité extérieure (220), comprenant :
un processeur ; et
un support non transitoire lisible par ordinateur comprenant un ou plusieurs composants exécutables par un processeur, le ou les composants exécutables par un processeur étant configurés pour être exécutés par le processeur afin d'amener le système à :
identifier, à l'aide d'un capteur (432), les forces s'exerçant sur l'aéronef à rotors basculants (10) ;
déterminer une première valeur de stabilité souhaitée pour une première pale de rotor (212a), sur la base au moins en partie des forces exercées sur l'aéronef à rotors basculants (10) ;
générer un premier signal de commande correspondant à la première valeur de stabilité souhaitée à un premier actionneur (252a) disposé dans la partie d'emplanture (212r) de la première pale de rotor (212a) pour amener le premier actionneur (252a) à ajuster une partie d'une première pale de rotor (212a) indépendamment des autres pales de rotor (212) ;
déterminer une seconde valeur de stabilité souhaitée pour une seconde pale de rotor (212b) sur la base au moins en partie des forces s'exerçant sur l'aéronef à rotors basculants (10) ; et
générer un second signal de commande correspondant à la seconde valeur de stabilité souhaitée à un second actionneur (252b) comprenant un actionneur de volet (356) pour amener l'actionneur de volet (356) à ajuster un volet (352) couplé à un bord de fuite (328) de la seconde pale de rotor (212b) indépendamment des autres pales de rotor (212), le volet (352) s'étendant sur presque toute la longueur du bord de fuite (328) ;
le premier et le second signal de commande étant différents.

12. Système selon la revendication 11, les premier et second signaux de commande étant non sinusoïdaux.
